(19) **Europäisches Patentamt / European Patent Office / Office européen des brevets**

(11) **EP 4 586 535 A1**

(12) **EUROPEAN PATENT APPLICATION**
published in accordance with Art. 153(4) EPC

(43) Date of publication:
**16.07.2025  Bulletin 2025/29**

(21) Application number: **23901046.5**

(22) Date of filing: **05.12.2023**

(51) International Patent Classification (IPC):
**H04L 5/00** (2006.01)     **H04W 72/04** (2023.01)

(52) Cooperative Patent Classification (CPC):
**H04L 5/00; H04W 72/04**

(86) International application number:
**PCT/KR2023/019849**

(87) International publication number:
**WO 2024/123027 (13.06.2024 Gazette 2024/24)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority:  **05.12.2022  KR 20220168206**

(71) Applicants:
- **Hyundai Motor Company**
  **Seoul 06797 (KR)**
- **Kia Corporation**
  **Seoul 06797 (KR)**
- **Seoul National University R&DB Foundation**
  **Seoul 08826 (KR)**

(72) Inventors:
- **LEE, Jeong Su**
  **Hwaseong-si, Gyeonggi-do 18280 (KR)**
- **HAHN, Gene Back**
  **Hwaseong-si, Gyeonggi-do 18280 (KR)**
- **HONG, Ui Hyun**
  **Hwaseong-si, Gyeonggi-do 18280 (KR)**
- **SUH, Young Kil**
  **Hwaseong-si, Gyeonggi-do 18280 (KR)**
- **CHOI, Wan**
  **Seoul 08826 (KR)**
- **KIM, Bum Jun**
  **Seoul 08826 (KR)**
- **KWON, Jeonghyeon**
  **Seoul 08826 (KR)**

(74) Representative: **Isarpatent**
**Patent- und Rechtsanwälte**
**Barth Hassa Peckmann & Partner mbB**
**Friedrichstraße 31**
**80801 München (DE)**

(54) **METHOD AND APPARATUS FOR TRANSMISSION AND RECEPTION OF PT-RS IN COMMUNICATION SYSTEM**

(57)    Disclosed are a method and an apparatus for transmission and reception of a PT-RS in a communication system. The method for a first TRP comprises the steps of: configuring a first parameter set for determining a first PT-RS resource of the first TRP; configuring a second parameter set for determining a second PT-RS resource so that the first PT-RS resource does not overlap the second PT-RS resource of a second TRP; transmitting the second parameter set to the second TRP; and transmitting a first PT-RS to a terminal in the first PT-RS resource determined on the basis of the first parameter set.

EP 4 586 535 A1

【FIG. 9】

**Description**

[Technical Field]

The present disclosure relates to a technique of designing a phase tracking-reference signal (PT-RS), and more particularly, to a technique of transmitting and receiving a PT-RS in a communication system including multiple transmission and reception points (MTRP).

[Background Art]

A communication network (e.g. 5G communication network or 6G communication network) is being developed to provide enhanced communication services compared to the existing communication networks (e.g. long term evolution (LTE), LTE-Advanced (LTE-A), etc.). The 5G communication network (e.g. New Radio (NR) communication network) can support frequency bands both below 6GHz and above 6GHz. In other words, the 5G communication network can support both a frequency region 1 (FR1) and/or FR2 bands. Compared to the LTE communication network, the 5G communication network can support various communication services and scenarios. For example, usage scenarios of the 5G communication network may include enhanced Mobile BroadBand (eMBB), Ultra Reliable Low Latency Communication (URLLC), massive Machine Type Communication (mMTC), and the like.

The 6G communication network can support a variety of communication services and scenarios compared to the 5G communication network. The 6G communication network can meet the requirements of hyper-performance, hyperbandwidth, hyper-space, hyper-precision, hyper-intelligence, and/or hyper-reliability. The 6G communication network can support diverse and wide frequency bands and can be applied to various usage scenarios such as terrestrial communication, nonterrestrial communication, sidelink communication, and the like.

Meanwhile, a communication system may support multiple transmission and reception points (MTRP) technology. In the communication system, a phase tracking reference signal (PT-RS) may be used to compensate for a phase noise (e.g. phase error) of an oscillator. In downlink communication, MTRPs may transmit PT-RS, and a PT-RS collision may occur between MTRPs. If a PT-RS collision occurs, communication performance may deteriorate. Therefore, methods for preventing PT-RS collisions are required.

[Disclosure]

[Technical Problem]

The present disclosure is directed to providing a method and an apparatus for transmitting and receiving PT-RS in a communication system including multiple transmission and reception points (MTRP).

[Technical Solution]

A method of a first transmission and reception point (TRP), according to exemplary embodiments of the present disclosure for achieving the above-described objective, may comprise: configuring a first parameter set for determining a first phase tracking- reference signal (PT-RS) resource of the first TRP; configuring a second parameter set for determining a second PT-RS resource of a second TRP so that the first PT-RS resource and the second PT-RS resource do not overlap; transmitting the second parameter set to the second TRP; and transmitting a first PT-RS to a terminal in the first PT-RS resource determined based on the first parameter set.

The first parameter set may include at least one of a first PT-RS resource block (RB) offset or a first PT-RS resource element (RE) offset, the first PT-RS RB offset may be an RB offset between a first reference RB and a first starting RB to which the first PT-RS is mapped, and the first PT-RS RE offset may be an RE offset between a first subcarrier and a first starting subcarrier to which the first PT-RS is mapped within the first starting RB, and the second parameter set may include at least one of a second PT-RS RB offset or a second PT-RS RE offset, the second PT-RS RB offset may be an RB offset between a second reference RB and a second starting RB to which the second PT-RS is mapped, and the second PT-RS RE offset may be an RE offset between a first subcarrier and a second starting subcarrier to which the second PT-RS is mapped within the second starting RB.

The first reference RB may be a first RB within a first frequency band allocated to the first TRP, and the second reference RB may be a first RB within a second frequency band allocated to the second TRP.

The method may further comprise: setting a first minimum number of PT-RS subcarriers; and setting a first PT-RS frequency density, wherein the first parameter set may be configured considering at least one of the first minimum number of PT-RS subcarriers or the first PT-RS frequency density, the first minimum number of PT-RS subcarriers may be a number of consecutive subcarriers to which the first PT-RS is mapped in a frequency band, and the first PT-RS frequency density may be a mapping interval of the first PT-RS in frequency domain.

The first minimum number of PT-RS subcarriers may be set based on a result of comparison between a number of panels of the first TRP and a number of orthogonal sequences of the first PT-RS.

The first PT-RS frequency density may be set based on a result of comparison between a frequency bandwidth allocated to the terminal by the first TRP and a reference frequency bandwidth.

The method may further comprise: receiving, from the second TRP, at least one of information of a second minimum number of PT-RS subcarriers or information of a second PT-RS frequency density, wherein the second parameter set may be configured considering at least one of the second minimum number of PT-RS subcarriers or the second PT-RS frequency density, the second minimum number of PT-RS subcarriers may be a number of consecutive subcarriers to which the second PT-RS is mapped in a frequency band, and the second PT-RS frequency density may be a mapping interval of the second PT-RS in frequency domain.

The method may further comprise: transmitting the first parameter set and the second parameter set to the terminal.

The second parameter set may be transmitted and received through a backhaul link between the first TRP and the second TRP or transmitted and received through a first link between the first TRP and the terminal and a second link between the terminal and the second TRP.

A method of a second transmission and reception point (TRP), according to exemplary embodiments of the present disclosure for achieving the above-described objective, may comprise: configuring one or more information elements considered for determining a second phase tracking-reference signal resource of the second TRP; transmitting the one or more information elements to a first TRP; receiving a second parameter set for determining the second PT-RS resource from the first TRP; and transmitting a second PT-RS to a terminal in the second PT-RS resource determined based on the second parameter set, wherein the second parameter set may be configured considering the one or more information elements, and the second PT-RS resource may be configured so as not to overlap with a first PT-RS resource of the first TRP.

The one or more information elements may include at least one of information of a second minimum number of PT-RS subcarriers or information of a second PT-RS frequency density, the second minimum number of PT-RS subcarriers may be a number of consecutive subcarriers to which the second PT-RS is mapped in a frequency band, and the second PT-RS frequency density may be a mapping interval of the second PT-RS in frequency domain.

The second minimum number of PT-RS subcarriers may be set based on a result of comparison between a number of panels of the second TRP and a number of orthogonal sequences of the second PT-RS.

The second PT-RS frequency density may be set based on a result of comparison between a frequency bandwidth allocated to the terminal by the second TRP and a reference frequency bandwidth.

The second parameter set may include at least one of a second PT-RS resource block (RB) offset or a second PT-RS resource element (RE) offset, the second PT-RS RB offset may be an RB offset between a second reference RB and a second starting RB to which the second PT-RS is mapped, and the second PT-RS RE offset may be an RE offset between a first subcarrier and a second starting subcarrier to which the second PT-RS is mapped within the second starting RB.

The one or more information elements and the second parameter set may be transmitted and received through a backhaul link between the first TRP and the second TRP or transmitted and received through a first link between the first TRP and the terminal and a second link between the terminal and the second TRP.

A first transmission and reception point (TRP), according to exemplary embodiments of the present disclosure for achieving the above-described objective, may comprise at least one processor, wherein the at least one processor may cause the first TRP to perform: configuring a first parameter set for determining a first phase tracking- reference signal (PT-RS) resource of the first TRP; configuring a second parameter set for determining a second PT-RS resource of a second TRP so that the first PT-RS resource and the second PT-RS resource do not overlap; transmitting the second parameter set to the second TRP; and transmitting a first PT-RS to a terminal in the first PT-RS resource determined based on the first parameter set.

The first parameter set may include at least one of a first PT-RS resource block (RB) offset or a first PT-RS resource element (RE) offset, the first PT-RS RB offset may be an RB offset between a first reference RB and a first starting RB to which the first PT-RS is mapped, and the first PT-RS RE offset may be an RE offset between a first subcarrier and a first starting subcarrier to which the first PT-RS is mapped within the first starting RB, and the second parameter set may include at least one of a second PT-RS RB offset or a second PT-RS RE offset, the second PT-RS RB offset may be an RB offset between a second reference RB and a second starting RB to which the second PT-RS is mapped, and the second PT-RS RE offset may be an RE offset between a first subcarrier and a second starting subcarrier to which the second PT-RS is mapped within the second starting RB.

The at least one processor may further cause the first TRP to perform: setting a first minimum number of PT-RS subcarriers; and setting a first PT-RS frequency density, wherein the first parameter set may be configured considering at least one of the first minimum number of PT-RS subcarriers or the first PT-RS frequency density, the first minimum number of PT-RS subcarriers may be a number of consecutive subcarriers to which the first PT-RS is mapped in a frequency band, and the first PT-RS frequency density may be a mapping interval of the first PT-RS in frequency domain.

The at least one processor may further cause the first TRP to perform: receiving, from the second TRP, at least one of information of a second minimum number of PT-RS subcarriers or information of a second PT-RS frequency density, wherein the second parameter set may be configured considering at least one of the second minimum number of PT-RS subcarriers or the second PT-RS frequency density, the second minimum number of PT-RS subcarriers may be a number of consecutive subcarriers to which the second PT-RS is mapped in a frequency band, and the second PT-RS frequency density may be a mapping interval of the second PT-RS in frequency domain.

The at least one processor may further cause the first TRP to perform: transmitting the first parameter set and the second parameter set to the terminal.

[Advantageous Effects]

According to the present disclosure, to prevent a phase tracking- reference signal (PT-RS) collision between TRPs, a reference TRP or a base station can configure PT-RS resources and transmit PT-RS configuration information, which indicates the PT-RS resources, to other TRPs. The TRPs can transmit PT-RSs using different PT-RS resources. Accordingly, PT-RS collisions can be prevented, phase noise can be compensated based on the PT-RSs, and, as a result, the performance of the communication system can be improved.

[Description of Drawings]

FIG. 1 is a conceptual diagram illustrating a first exemplary embodiment of a communication system.

FIG. 2 is a block diagram illustrating a first exemplary embodiment of a communication node constituting a communication system.

FIG. 3 is a block diagram illustrating a first exemplary embodiment of communication nodes performing communication.

FIG. 4A is a block diagram illustrating a first exemplary embodiment of a transmission path.

FIG. 4B is a block diagram illustrating a first exemplary embodiment of a reception path.

FIG. 5 is a conceptual diagram illustrating a first exemplary embodiment of a system frame in a communication system.

FIG. 6 is a conceptual diagram illustrating a first exemplary embodiment of a subframe in a communication system.

FIG. 7 is a conceptual diagram illustrating a first exemplary embodiment of a slot in a communication system.

FIG. 8 is a conceptual diagram illustrating a first exemplary embodiment of a time-frequency resource in a communication system.

FIG. 9 is a sequence chart illustrating a first exemplary embodiment of a method for PT-RS configuration and transmission.

FIG. 10 is a sequence chart illustrating a second exemplary embodiment of a method for PT-RS configuration and transmission.

FIG. 11 is a sequence chart illustrating a third exemplary embodiment of a method for PT-RS configuration and transmission.

[Mode for Invention]

Since the present disclosure may be variously modified and have several forms, specific exemplary embodiments will be shown in the accompanying drawings and be described in detail in the detailed description. It should be understood, however, that it is not intended to limit the present disclosure to the specific exemplary embodiments but, on the contrary, the present disclosure is to cover all modifications and alternatives falling within the spirit and scope of the present disclosure.

Relational terms such as first, second, and the like may be used for describing various elements, but the elements should not be limited by the terms. These terms are only used to distinguish one element from another. For example, a first component may be named a second component without departing from the scope of the present disclosure, and the second component may also be similarly named the first component. The term "and/or" means any one or a combination of a plurality of related and described items.

In the present disclosure, "at least one of A and B" may refer to "at least one of A or B" or "at least one of combinations of one or more of A and B". In addition, "one or more of A and B" may refer to "one or more of A or B" or "one or more of combinations of one or more of A and B".

In the present disclosure, '(re)transmission' may refer to 'transmission', 'retransmission', or 'transmission and retransmission', '(re)configuration' may refer to 'configuration', 'reconfiguration', or 'configuration and reconfiguration', '(re)connection' may refer to 'connection', 'reconnection', or 'connection and reconnection', and '(re)access' may refer to 'access', 're-access', or 'access and re-access'.

When it is mentioned that a certain component is "coupled with" or "connected with" another component, it should be understood that the certain component is directly "coupled with" or "connected with" to the other component or a further component may be disposed therebetween. In contrast, when it is mentioned that a certain component is "directly coupled with" or "directly connected with" another component, it will be understood that a further component is not disposed therebetween.

The terms used in the present disclosure are only used to describe specific exemplary embodiments, and are not intended to limit the present disclosure. The singular expression includes the plural expression unless the context clearly dictates otherwise. In the present disclosure, terms such as 'comprise' or 'have' are intended to designate that a feature, number, step, operation, component, part, or combination thereof described in the specification exists, but it should be understood that the terms do not preclude existence or addition of one or more features, numbers, steps, operations, components, parts, or combinations thereof.

Unless otherwise defined, all terms (including technical and scientific terms) used herein have the same meaning as commonly understood by one of ordinary skill in the art to which this disclosure belongs. Terms that are generally used and have been in dictionaries should be construed as having meanings matched with contextual meanings in the art. In this description, unless defined clearly, terms are not necessarily construed as having formal meanings.

Hereinafter, exemplary embodiments of the present disclosure will be described in detail with reference to the accompanying drawings. In describing the disclosure, to facilitate the entire understanding of the disclosure, like numbers refer to like elements throughout the description of the figures and the repetitive description thereof will be omitted. The operations according to the exemplary embodiments described explicitly in the present disclosure, as well as combinations of the exemplary embodiments, extensions of the exemplary embodiments, and/or variations of the exemplary embodiments, may be performed. Some operations may be omitted, and a sequence of operations may be altered.

Even when a method (e.g. transmission or reception of a signal) to be performed at a first communication node among communication nodes is described in exemplary embodiments, a corresponding second communication node may perform a method (e.g. reception or transmission of the signal) corresponding to the method performed at the first communication node. That is, when an operation of a user equipment (UE) is described, a base station corresponding thereto may perform an operation corresponding to the operation of the UE. Conversely, when an operation of a base station is described, a corresponding UE may perform an operation corresponding to the operation of the base station.

The base station may be referred to by various terms such as NodeB, evolved NodeB, next generation node B (gNodeB), gNB, device, apparatus, node, communication node, base transceiver station (BTS), radio remote head (RRH), transmission reception point (TRP), radio unit (RU), road side unit (RSU), radio transceiver, access point, access node, and the like. The user equipment (UE) may be referred to by various terms such as terminal, device, apparatus, node, communication node, end node, access terminal, mobile terminal, station, subscriber station, mobile station, portable subscriber station, on-board unit (OBU), and the like.

In the present disclosure, signaling may be one or a combination of two or more of higher layer signaling, MAC signaling, and physical (PHY) signaling. A message used for higher layer signaling may be referred to as a 'higher layer message' or 'higher layer signaling message'. A message used for MAC signaling may be referred to as a 'MAC message' or 'MAC signaling message'. A message used for PHY signaling may be referred to as a 'PHY message' or 'PHY signaling message'. The higher layer signaling may refer to an operation of transmitting and receiving system information (e.g. master information block (MIB), system information block (SIB)) and/or an RRC message. The MAC signaling may refer to an operation of transmitting and receiving a MAC control element (CE). The PHY signaling may refer to an operation of transmitting and receiving control information (e.g. downlink control information (DCI), uplink control information (UCI), or sidelink control information (SCI)).

In the present disclosure, 'configuration of an operation (e.g. transmission operation)' may refer to signaling of configuration information (e.g. information elements, parameters) required for the operation and/or information indicating to perform the operation. 'configuration of information elements (e.g. parameters)' may refer to signaling of the information elements. In the present disclosure, 'signal and/or channel' may refer to signal, channel, or both signal and channel, and 'signal' may be used to mean 'signal and/or channel'.

A communication network to which exemplary embodiments are applied is not limited to that described below, and the exemplary embodiments may be applied to various communication networks (e.g. 4G communication networks, 5G communication networks, and/or 6G communication networks). Here, 'communication network' may be used interchangeably with a term 'communication system'.

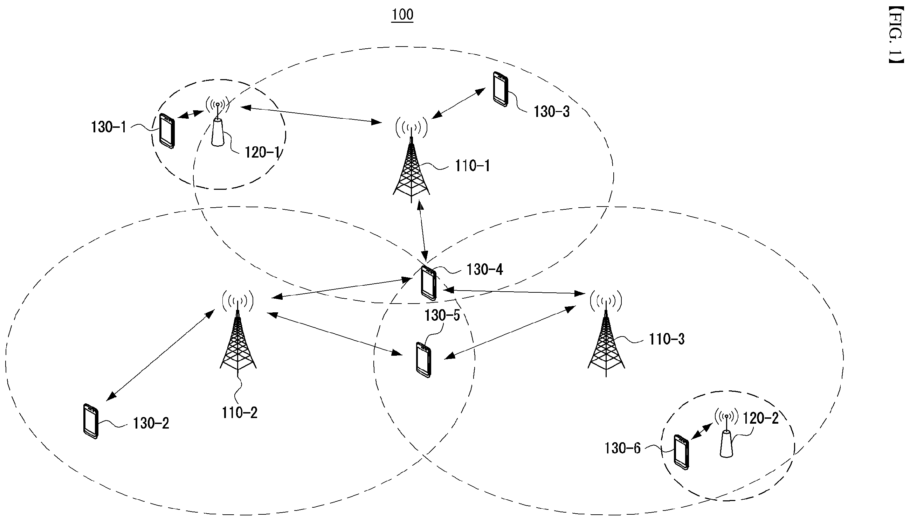

FIG. 1 is a conceptual diagram illustrating a first exemplary embodiment of a communication system.

As shown in FIG. 1, a communication system 100 may comprise a plurality of communication nodes 110-1, 110-2, 110-3, 120-1, 120-2, 130-1, 130-2, 130-3, 130-4, 130-5, and 130-6. In addition, the communication system 100 may further include a core network (e.g. a serving gateway (S-GW), a packet data network (PDN) gateway (P-GW), a mobility management entity (MME). When the communication system 100 is a 5G communication (e.g. NR system), the core network may include an access and mobility management function (AMF), a user plane function (UPF), a session management function (SMF), and the like.

The plurality of communication nodes 110 to 130 may support communication protocols (e.g. LTE communication protocol, LTE-A communication protocol, NR communication protocol, etc.) specified in 3rd generation partnership project (3GPP) standards. The plurality of communication nodes 110 to 130 may support a code division multiple access (CDMA) technique, a wideband CDMA (WCDMA) technique, a time division multiple access (TDMA) technique, a frequency division multiple access (FDMA) technique, an orthogonal frequency division multiplexing (OFDM) technique, a filtered OFDM technique, a cyclic prefix OFDM (CP-OFDM) technique, a discrete Fourier transform spread OFDM (DFT-s-OFDM) technique, an orthogonal frequency division multiple access (OFDMA) technique, a single carrier FDMA (SC-FDMA) technique, a non-orthogonal multiple access (NOMA) technique, a generalized frequency division multiplexing (GFDM) technique, a filter bank multi-carrier (FBMC) technique, a universal filtered multi-carrier (UFMC) technique, a space division multiple access (SDMA) technique, or the like. Each of the plurality of communication node may have the following structure.

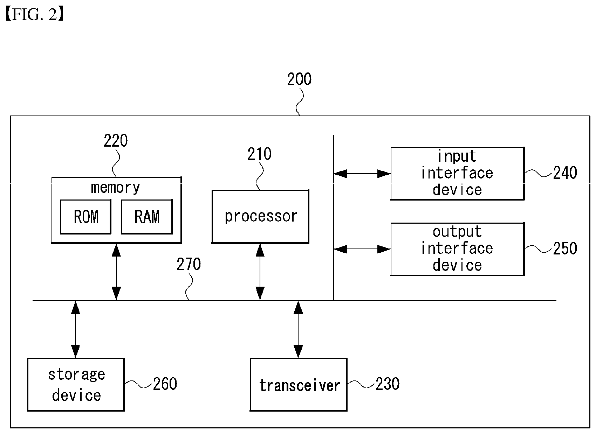

FIG. 2 is a block diagram illustrating a first exemplary embodiment of a communication node constituting a communication system.

As shown in FIG. 2, a communication node 200 may comprise at least one processor 210, a memory 220, and a transceiver 230 connected to the network for performing communications. Also, the communication node 200 may further comprise an input interface device 240, an output interface device 250, a storage device 260, and the like. Each component included in the communication node 200 may communicate with each other as connected through a bus 270.

The processor 210 may execute a program stored in at least one of the memory 220 and the storage device 260. The processor 210 may refer to a central processing unit (CPU), a graphics processing unit (GPU), or a dedicated processor on which methods in accordance with embodiments of the present disclosure are performed. Each of the memory 220 and the storage device 260 may be constituted by at least one of a volatile storage medium and a non-volatile storage medium. For example, the memory 220 may comprise at least one of read-only memory (ROM) and random access memory (RAM).

Referring again to FIG. 1, the communication system 100 may comprise a plurality of base stations 110-1, 110-2, 110-3, 120-1, and 120-2, and a plurality of terminals 130-1, 130-2, 130-3, 130-4, 130-5, and 130-6. The communication system 100 including the base stations 110-1, 110-2, 110-3, 120-1, and 120-2 and the terminals 130-1, 130-2, 130-3, 130-4, 130-5, and 130-6 may be referred to as an 'access network'. Each of the first base station 110-1, the second base station 110-2, and the third base station 110-3 may form a macro cell, and each of the fourth base station 120-1 and the fifth base station 120-2 may form a small cell. The fourth base station 120-1, the third terminal 130-3, and the fourth terminal 130-4 may belong to cell coverage of the first base station 110-1. Also, the second terminal 130-2, the fourth terminal 130-4, and the fifth terminal 130-5 may belong to cell coverage of the second base station 110-2. Also, the fifth base station 120-2, the fourth terminal 130-4, the fifth terminal 130-5, and the sixth terminal 130-6 may belong to cell coverage of the third base station 110-3. Also, the first terminal 130-1 may belong to cell coverage of the fourth base station 120-1, and the sixth terminal 130-6 may belong to cell coverage of the fifth base station 120-2.

Here, each of the plurality of base stations 110-1, 110-2, 110-3, 120-1, and 120-2 may refer to a Node-B, evolved Node-B (eNB), gNB, advanced base station (ABS), high reliability-base station (HR-BS), base transceiver station (BTS), radio base station, radio transceiver, access point, access node, radio access station (RAS), mobile multihop relay-base station (MMR-BS), relay station (RS), advanced relay station (ARS), high reliability-relay station (HR-RS), home NodeB (HNB), home eNodeB (HeNB), road side unit (RSU), radio remote head (RRH), transmission point (TP), transmission and reception point (TRP), or the like.

Each of the plurality of terminals 130-1, 130-2, 130-3, 130-4, 130-5, and 130-6 may refer to a user equipment (UE), terminal equipment (TE), advanced mobile station (AMS), high reliability-mobile station (HR-MS), terminal, access terminal, mobile terminal, station, subscriber station, mobile station, portable subscriber station, node, device, on-board unit (OBU), or the like.

Meanwhile, each of the plurality of base stations 110-1, 110-2, 110-3, 120-1, and 120-2 may operate in the same frequency band or in different frequency bands. The plurality of base stations 110-1, 110-2, 110-3, 120-1, and 120-2 may be connected to each other via an ideal backhaul or a non-ideal backhaul, and exchange information with each other via the ideal or non-ideal backhaul. Also, each of the plurality of base stations 110-1, 110-2, 110-3, 120-1, and 120-2 may be connected to the core network through the ideal or non-ideal backhaul. Each of the plurality of base stations 110-1, 110-2, 110-3, 120-1, and 120-2 may transmit a signal received from the core network to the corresponding terminal 130-1, 130-2, 130-3, 130-4, 130-5, or 130-6, and transmit a signal received from the corresponding terminal 130-1, 130-2, 130-3, 130-4, 130-5, or 130-6 to the core network.

In addition, each of the plurality of base stations 110-1, 110-2, 110-3, 120-1, and 120-2 may support multi-input multi-output (MIMO) transmission (e.g. a singleuser MIMO (SU-MIMO), multi-user MIMO (MU-MIMO), massive MIMO, or the like), coordinated multipoint (CoMP) transmission, carrier aggregation (CA) transmission, transmission in an unlicensed band, sidelink communication (e.g. device-to-device (D2D) communication, proximity services (ProSe)), Internet of Things (IoT) communication, dual connectivity (DC), and/or the like. Here, each of the plurality of terminals 130-1, 130-2, 130-3, 130-4, 130-5, and 130-6 may perform operations corresponding to the operations of the plurality of base stations 110-1, 110-2, 110-3, 120-1, and 120-2, and operations supported by the plurality of base stations 110-1, 110-2, 110-3, 120-1, and 120-2. For example, the second base station 110-2 may transmit a signal to the fourth terminal 130-4 in the SU-MIMO manner, and the fourth terminal 130-4 may receive the signal from the second base station 110-2 in the SU-MIMO manner. Alternatively, the second base station 110-2 may transmit a signal to the fourth terminal 130-4 and fifth terminal 130-5 in the MU-MIMO manner, and the fourth terminal 130-4 and fifth terminal 130-5 may receive the signal from the second base station 110-2 in the MU-MIMO manner.

The first base station 110-1, the second base station 110-2, and the third base station 110-3 may transmit a signal to the fourth terminal 130-4 in the CoMP transmission manner, and the fourth terminal 130-4 may receive the signal from the first base station 110-1, the second base station 110-2, and the third base station 110-3 in the CoMP manner. Also, each of the plurality of base stations 110-1, 110-2, 110-3, 120-1, and 120-2 may exchange signals with the corresponding terminals 130-1, 130-2, 130-3, 130-4, 130-5, or 130-6 which belongs to its cell coverage in the CA manner. Each of the base stations 110-1, 110-2, and 110-3 may control sidelink communications between the fourth terminal 130-4 and the fifth terminal 130-5, and thus the fourth terminal 130-4 and the fifth terminal 130-5 may perform the sidelink communications under control of the second base station 110-2 and the third base station 110-3, respectively.

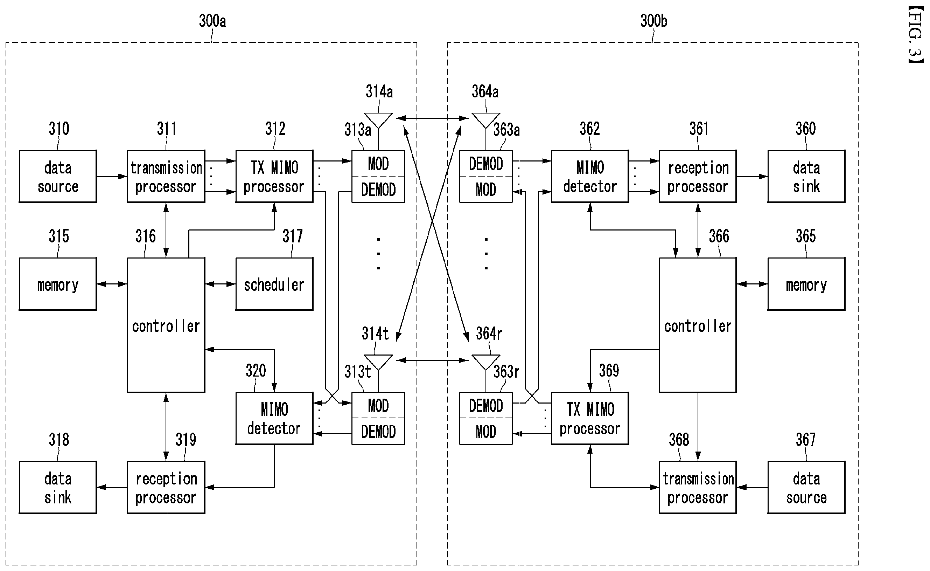

Meanwhile, communication nodes that perform communications in the communication network may be configured as follows. A communication node shown in FIG. 3 may be a specific exemplary embodiment of the communication node shown in FIG. 2.

FIG. 3 is a block diagram illustrating a first exemplary embodiment of communication nodes performing communication.

As shown in FIG. 3, each of a first communication node 300a and a second communication node 300b may be a base station or UE. The first communication node 300a may transmit a signal to the second communication node 300b. A transmission processor 311 included in the first communication node 300a may receive data (e.g. data unit) from a data source 310. The transmission processor 311 may receive control information from a controller 316. The control information may include at least one of system information, RRC configuration information (e.g. information configured by RRC signaling), MAC control information (e.g. MAC CE), or PHY control information (e.g. DCI, SCI).

The transmission processor 311 may generate data symbol(s) by performing processing operations (e.g. encoding operation, symbol mapping operation, etc.) on the data. The transmission processor 311 may generate control symbol(s) by performing processing operations (e.g. encoding operation, symbol mapping operation, etc.) on the control information. In addition, the transmission processor 311 may generate synchronization/reference symbol(s) for synchronization signals and/or reference signals.

A Tx MIMO processor 312 may perform spatial processing operations (e.g. precoding operations) on the data symbol(s), control symbol(s), and/or synchronization/reference symbol(s). An output (e.g. symbol stream) of the Tx MIMO processor 312 may be provided to modulators (MODs) included in transceivers 313a to 313t. The modulator may generate modulation symbols by performing processing operations on the symbol stream, and may generate signals by performing additional processing operations (e.g. analog conversion operations, amplification operation, filtering operation, up-conversion operation, etc.) on the modulation symbols. The signals generated by the modulators of the transceivers 313a to 313t may be transmitted through antennas 314a to 314t.

The signals transmitted by the first communication node 300a may be received at antennas 364a to 364r of the second communication node 300b. The signals received at the antennas 364a to 364r may be provided to demodulators (DEMODs) included in transceivers 363a to 363r. The demodulator (DEMOD) may obtain samples by performing processing operations (e.g. filtering operation, amplification operation, down-conversion operation, digital conversion operation, etc.) on the signals. The demodulator may perform additional processing operations on the samples to obtain symbols. A MIMO detector 362 may perform MIMO detection operations on the symbols. A reception processor 361 may perform processing operations (e.g. de-interleaving operation, decoding operation, etc.) on the symbols. An output of the reception processor 361 may be provided to a data sink 360 and a controller 366. For example, the data may be provided to the data sink 360 and the control information may be provided to the controller 366.

On the other hand, the second communication node 300b may transmit signals to the first communication node 300a. A transmission processor 368 included in the second communication node 300b may receive data (e.g. data unit) from a data source 367 and perform processing operations on the data to generate data symbol(s). The transmission processor 368 may receive control information from the controller 366 and perform processing operations on the control information to generate control symbol(s). In addition, the transmission processor 368 may generate reference symbol(s) by performing processing operations on reference signals.

A Tx MIMO processor 369 may perform spatial processing operations (e.g. precoding operations) on the data symbol(s), control symbol(s), and/or reference symbol(s). An output (e.g. symbol stream) of the Tx MIMO processor 369 may be provided to modulators (MODs) included in the transceivers 363a to 363t. The modulator may generate modulation symbols by performing processing operations on the symbol stream, and may generate signals by performing additional processing operations (e.g. analog conversion operation, amplification operation, filtering operation, up-conversion operations) on the modulation symbols. The signals generated by the modulators of the transceivers 363a to 363t may be transmitted through the antennas 364a to 364t.

The signals transmitted by the second communication node 300b may be received at the antennas 314a to 314r of the first communication node 300a. The signals received at the antennas 314a to 314r may be provided to demodulators (DEMODs) included in the transceivers 313a to 313r. The demodulator may obtain samples by performing processing operations (e.g. filtering operation, amplification operation, down-conversion operation, digital conversion operation) on the signals. The demodulator may perform additional processing operations on the samples to obtain symbols. A MIMO detector 320 may perform a MIMO detection operation on the symbols. The reception processor 319 may perform processing operations (e.g. de-interleaving operation, decoding operation, etc.) on the symbols. An output of the reception processor 319 may be provided to a data sink 318 and the controller 316. For example, the data may be provided to the data sink 318 and the control information may be provided to the controller 316.

Memories 315 and 365 may store the data, control information, and/or program codes. A scheduler 317 may perform scheduling operations for communication. The processors 311, 312, 319, 361, 368, and 369 and the controllers 316 and 366 shown in FIG. 3 may be the processor 210 shown in FIG. 2, and may be used to perform methods described in the present disclosure.

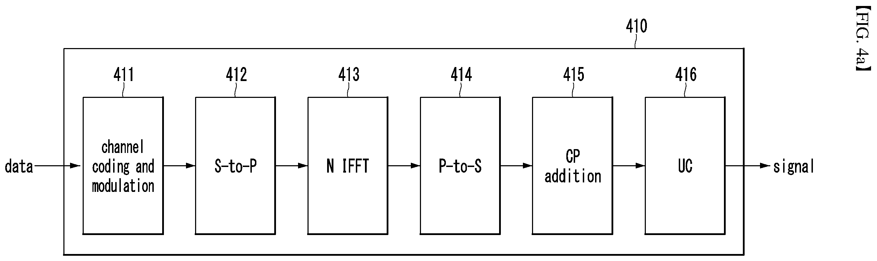

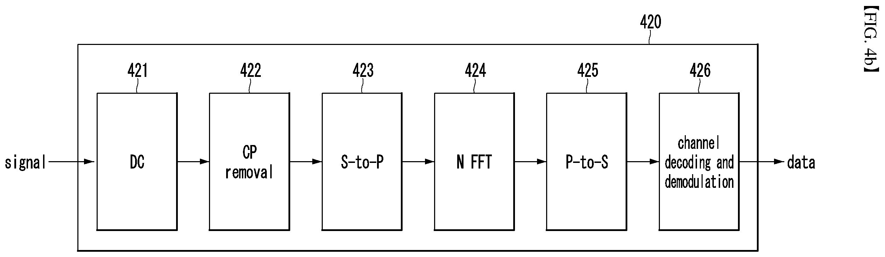

FIG. 4A is a block diagram illustrating a first exemplary embodiment of a transmission path, and FIG. 4B is a block diagram illustrating a first exemplary embodiment of a reception path.

As shown in FIGS. 4A and 4B, a transmission path 410 may be implemented in a communication node that transmits signals, and a reception path 420 may be implemented in a communication node that receives signals. The transmission path 410 may include a channel coding and modulation block 411, a serial-to-parallel (S-to-P) block 412, an N-point inverse fast Fourier transform (N-point IFFT) block 413, a parallel-to-serial (P-to-S) block 414, a cyclic prefix (CP) addition block 415, and upconverter (UC) 416. The reception path 420 may include a down-converter (DC) 421, a CP removal block 422, an S-to-P block 423, an N-point FFT block 424, a P-to-S block 425, and a channel decoding and demodulation block 426. Here, N may be a natural number.

In the transmission path 410, information bits may be input to the channel coding and modulation block 411. The channel coding and modulation block 511 may perform a coding operation (e.g. low-density parity check (LDPC) coding operation, polar coding operation, etc.) and a modulation operation (e.g. Quadrature Phase Shift Keying (OPSK), Quadrature Amplitude Modulation (QAM), etc.) on the information bits. An output of the channel coding and modulation block 411 may be a sequence of modulation symbols.

The S-to-P block 412 may convert frequency domain modulation symbols into parallel symbol streams to generate N parallel symbol streams. N may be the IFFT size or the FFT size. The N-point IFFT block 413 may generate time domain signals by performing an IFFT operation on the N parallel symbol streams. The P-to-S block 414 may convert the output (e.g., parallel signals) of the N-point IFFT block 413 to serial signals to generate the serial signals.

The CP addition block 415 may insert a CP into the signals. The UC 416 may up-convert a frequency of the output of the CP addition block 415 to a radio frequency (RF) frequency. Further, the output of the CP addition block 415 may be filtered in baseband before the up-conversion.

The signal transmitted from the transmission path 410 may be input to the reception path 420. Operations in the reception path 420 may be reverse operations for the operations in the transmission path 410. The DC 421 may down-convert a frequency of the received signals to a baseband frequency. The CP removal block 422 may remove a CP from the signals. The output of the CP removal block 422 may be serial signals. The S-to-P block 423 may convert the serial signals into parallel signals. The N-point FFT block 424 may generate N parallel signals by performing an FFT algorithm. The P-to-S block 425 may convert the parallel signals into a sequence of modulation symbols. The channel decoding and demodulation block 426 may perform a demodulation operation on the modulation symbols and may restore data by performing a decoding operation on a result of the demodulation operation.

In FIGS. 4A and 4B, discrete Fourier transform (DFT) and inverse DFT (IDFT) may be used instead of FFT and IFFT. Each of the blocks (e.g. components) in FIGS. 4A and 4B may be implemented by at least one of hardware, software, or firmware. For example, some blocks in FIGS. 4A and 4B may be implemented by software, and other blocks may be implemented by hardware or a combination of hardware and software. In FIGS. 4A and 4B, one block may be subdivided into a plurality of blocks, a plurality of blocks may be integrated into one block, some blocks may be omitted, and blocks supporting other functions may be added.

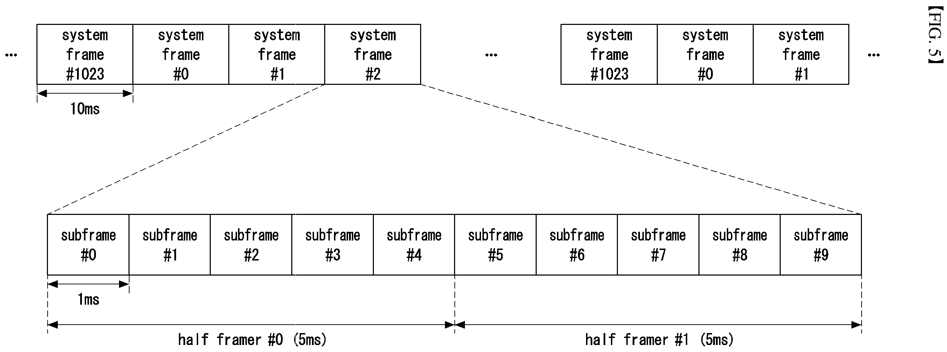

FIG. 5 is a conceptual diagram illustrating a first exemplary embodiment of a system frame in a communication system.

As shown in FIG. 5, time resources in the communication system may be divided on a frame basis. For example, system frames of the communication system may be configured continuously in the time domain. The length of the system frame may be 10 millisecond (ms). A system frame number (SFN) may be set to one of #0 to #1023. In this case, 1024 system frames may be repeated on the time domain of the communication system. For example, an SFN of a system frame after the system frame #1023 may be #0.

One system frame may include two half frames. The length of one half frame may be 5 ms. A half frame located at a starting region of the system frame may be referred to as 'half frame #0', and a half frame located at an ending region of the system frame may be referred to as 'half frame #1'. One system frame may include 10 subframes. The length of one subframe may be 1 ms. 10 subframes within one system frame may be referred to as subframes #0-#9.

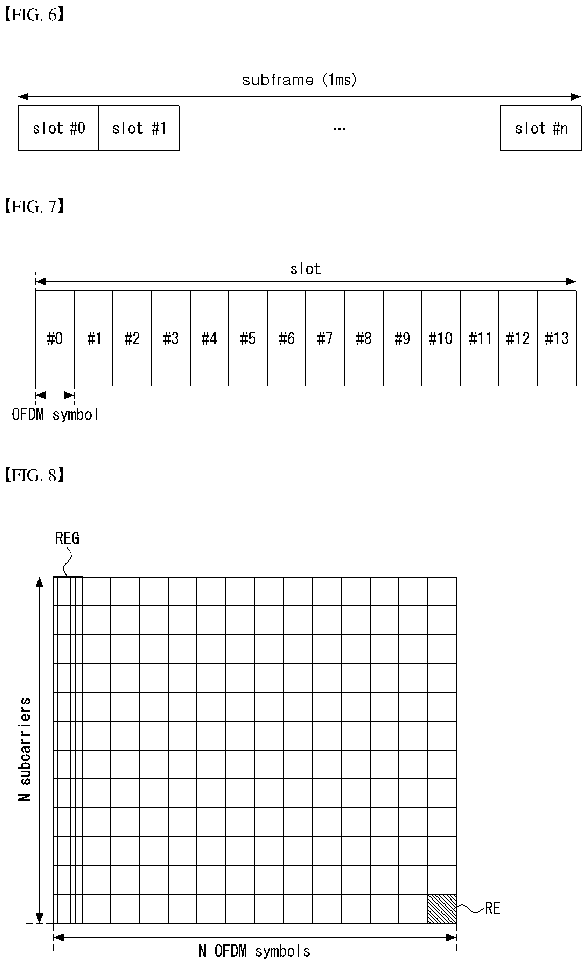

FIG. 6 is a conceptual diagram illustrating a first exemplary embodiment of a subframe in a communication system.

As shown in FIG. 6, one subframe may include n slots, and n may be a natural number. Accordingly, one subframe may consist of one or more slots.

FIG. 7 is a conceptual diagram illustrating a first exemplary embodiment of a slot in a communication system.

As shown in FIG. 7, one slot may include one or more symbols. For example, one slot shown in FIG. 7 may include 14 symbols. The length of slot may vary according to the number of symbols included in a slot and the length of symbol. Alternatively, the length of slot may vary according to a numerology.

The numerology applied to physical signals and channels in a communication system may be variable. The numerology may be adjusted to meet various technical requirements of the communication system. In a communication system where a cyclic prefix (CP)-based OFDM waveform technology is applied, the numerology may include a subcarrier spacing and a CP length (or CP type). Table 1 may illustrate a first exemplary embodiment of a method for configuring numerologies for a CP-OFDM-based communication system. Depending on a frequency band in which the communication system operates, at least some of the numerologies in Table 1 may be supported. Additionally, the communication system may support numerologies not listed in Table 1.

[Table 1]

| Subcarrier spacing | 15 kHz | 30 kHz | 60 kHz | 120 kHz | 240 kHz | 480 kHz |
|---|---|---|---|---|---|---|
| OFDM symbol length [$\mu$s] | 66.7 | 33.3 | 16.7 | 8.3 | 4.2 | 2.1 |
| CP length [us] | 4.76 | 2.38 | 1.19 | 0.60 | 0.30 | 0.15 |
| Number of OFDM symbols within 1ms | 14 | 28 | 56 | 112 | 224 | 448 |

When a subcarrier spacing is 15 kHz (e.g. $\mu = 0$), the length of slot may be 1 ms. In this case, one system frame may include 10 slots. When a subcarrier spacing is 30 kHz (e.g. $\mu = 1$), the length of slot may be 0.5 ms. In this case, one system frame may include 20 slots.

When a subcarrier spacing is 60 kHz (e.g. $\mu = 2$), the length of slot may be 0.25 ms. In this case, one system frame may include 40 slots. When a subcarrier spacing is 120 kHz (e.g. $\mu = 3$), the length of slot may be 0.125 ms. In this case, one system frame may include 80 slots. When a subcarrier spacing is 240 kHz (e.g. $\mu = 4$), the length of slot may be 0.0625 ms. In this case, one system frame may include 160 slots.

The symbol may be configured as a downlink (DL) symbol, flexible (FL) symbol, or uplink (UL) symbol. A slot composed of only DL symbols may be referred to as a 'DL slot', a slot composed of only FL symbols may be referred to as a 'FL slot', and a slot composed of only UL symbols may be referred to as a 'UL slot'.

A slot format may be semi-statically configured through higher-layer signaling (e.g. RRC signaling). Information indicating a semi-static slot format may be included in system information, and the semi-static slot format may be configured cellspecifically. Additionally, a semi-static slot format may be further configured for each terminal through terminal-specific higher-layer signaling (e.g. RRC signaling). Flexible symbols in the cell-specific slot format may be overridden to be downlink symbols or uplink symbols through terminal-specific higher-layer signaling. Furthermore, a slot format may be dynamically indicated through physical layer signaling (e.g. slot format indicator (SFI) included in DCI). The semi-statically configured slot format may be overridden by the dynamically indicated slot format. For example, flexible symbols configured semi-statically may be overridden to be downlink symbols or uplink symbols by the SFI.

Reference signals may include Channel State Information-Reference Signal (CSI-RS), Sounding Reference Signal (SRS), Demodulation-Reference Signal (DM-RS), and Phase Tracking-Reference Signal (PT-RS). Channels may include Physical Broadcast Channel (PBCH), Physical Downlink Control Channel (PDCCH), Physical Downlink Shared Channel (PDSCH), Physical Uplink Control Channel (PUCCH), PUSCH (Physical Uplink Shared Channel), PSCCH (Physical Sidelink Control Channel), and PSSCH (Physical Sidelink Shared Channel). In the present disclosure, a control channel may refer to PDCCH, PUCCH, or PSCCH, and a data channel may refer to PDSCH, PUSCH, or PSSCH.

FIG. 8 is a conceptual diagram illustrating a first exemplary embodiment of a time-frequency resource in a communication system.

As shown FIG. 8, a resource composed of one OFDM symbol on the time axis and one subcarrier on the frequency axis may be defined as a 'resource element (RE)'. A resource composed of one OFDM symbol on the time axis and K subcarriers on the frequency axis may be defined as a 'resource element group (REG)'. The REG may include K REs. The REG may be used as a basic unit of resource allocation in the frequency domain. K may be a natural number. For example, K may be 12. N may be a natural number. In the slot shown in FIG.7, N may be 14. N OFDM symbols may be used as a basic unit of resource allocation in the time domain.

In the present disclosure, an RB may refer to a common RB (CRB). Alternatively, an RB may refer to a physical RB (PRB) or a virtual RB (VRB). In a communication system, a CRB may refer to an RB that constitutes a set of contiguous RBs (e.g. a common RB grid) based on a reference frequency (e.g. point A). A carrier and/or bandwidth part may be mapped onto the common RB grid. That is, a carrier and/or bandwidth part may be configured with CRB(s). The RBs or CRBs that constitute a bandwidth part may be referred to as PRBs, and a CRB index may be appropriately converted to a PRB index within the bandwidth part.

Downlink data may be transmitted through a PDSCH. A base station may transmit configuration information (e.g. scheduling information) of the PDSCH to a terminal through a PDCCH. The terminal may obtain the configuration information of the PDSCH by receiving the PDCCH (e.g. Downlink Control Information (DCI)). For example, the configuration information of the PDSCH may include a Modulation Coding Scheme (MCS) used for transmission/reception of the PDSCH, time resource information of the PDSCH, frequency resource information of the PDSCH, and feedback resource information for the PDSCH. The PDSCH may refer to a radio resource where the downlink data is transmitted and received. Alternatively, the PDSCH may refer to the downlink data itself. The PDCCH may refer to a radio resource where the downlink control information (e.g. DCI) is transmitted and received. Alternatively, the PDCCH may refer to the downlink control information itself.

The terminal may perform a monitoring operation for the PDCCH to receive the PDSCH transmitted from the base station. The base station may notify the terminal of configuration information for the PDCCH monitoring operation using a higher-layer message (e.g. Radio Resource Control (RRC) message). The configuration information for the PDCCH monitoring operation may include Control Resource Set (CORESET) information and search space information.

The CORESET information may include PDCCH DMRS information, PDCCH precoding information, and PDCCH occasion information, and the like. A PDCCH DMRS may be a DMRS used for demodulating a PDCCH. A PDCCH occasion refers to a region where a PDCCH may potentially exist, meaning it is a region where DCI can be transmitted. A PDCCH occasion may also be referred to as a PDCCH candidate. The PDCCH occasion information may include time resource information and frequency resource information for the PDCCH occasion. In the time domain, the length of the PDCCH occasion may be indicated in symbol units. In the frequency domain, the size of the PDCCH occasion can be indicated in RB units (e.g. in PRB units or CRB units).

The search space information may include a CORESET identifier (ID) associated with a search space, a periodicity of PDCCH monitoring, and/or an offset of PDCCH monitoring. The periodicity and offset of PDCCH monitoring may each be indicated in slot units. Additionally, the search space information may further include an index of a symbol where the PDCCH monitoring operation starts.

The base station may configure Bandwidth Part(s) (BWP(s)) for downlink communication. The BWP(s) may be configured differently for each terminal. The base station may notify the terminal of BWP configuration information using higher-layer signaling. The higher-layer signaling may refer to a transmission operation of system information and/or a transmission operation of RRC message(s). The number of BWPs configured for a single terminal may be one or more. The terminal may receive the BWP configuration information from the base station and identify the configured BWP(s) based on the received configuration information. When multiple BWPs are configured for downlink communication, the base station may activate one or more BWPs from among the multiple BWPs. The base station may transmit configuration information of the activated BWP(s) to the terminal using at least one of higher-layer signaling, Medium Access Control (MAC) Control Element (CE), or DCI. The base station may perform downlink communication using the activated BWP(s). The terminal may identify the activated BWP(s) by receiving the configuration information from the base station and perform downlink reception operations on the activated BWP(s).

Meanwhile, a communication system may support multiple transmission and reception point (MTRP) technology. In the communication system supporting MTRP technology, multiple TRPs (MTRPs) may be deployed in geographically separated areas, and a base station may use MTRPs to communicate with a terminal. When the MTRP technology is used, a problem of decreased quality of service (QoS) and/or an inter-cell interference problem for terminals located at a cell edge of the base station may be resolved. In a high-frequency band such as a mmWave band and a terahertz (THz) band, non-line-of-sight (NLOS) paths may be limited, and in such cases, additional communication paths may be provided via MTRPs.

MTRPs may perform communication based on a coherent joint transmission (CJT) scheme or a non-coherent joint transmission (NCJT) scheme. When the CJT scheme is used, the MTRPs may provide synchronized communication services to a terminal through cooperation among the MTRPs. When the NCJT scheme is used, the MTRPs may provide communication services to a terminal without cooperation among the MTRPs. In other words, each TRP may independently perform a scheduling operation, selection operation of a precoding matrix, and/or determination operation of a modulation and coding scheme (MCS).

The operating bands of the communication system may include FR1 bands n1 to n99 and FR2 bands n257 to n262. The FR1 bands and the FR2 bands may support different frequency bands, different duplex modes, different subcarrier spacings (SCSs), and/or different channel bandwidths. When communication between the base station and the terminal is performed in an FR2 band, the communication performance may be degraded due to phase noise (e.g. phase error) of an oscillator. In order to compensate for phase noise in the FR2 band, phase tracking-reference signal (PT-RS) may be used.

The phase noise may refer to a noise that occurs during a process of generating signals in the oscillator. In a low frequency band such as the FR1 band, the effect of phase noise generated by the oscillator may be negligible, but in a high frequency band such as the FR2 band, a phase noise generated by the oscillator may have a significant effect on communication performance. The phase noise may change frequently over time, and the change in phase noise with respect to frequency may be small. Therefore, in the time domain, a density of PT-RS may be high, and in the frequency domain, a density of PT-RS may be low. In the time domain, the PT-RS may be mapped (e.g. arranged, transmitted, or configured) at intervals of 1, 2, or 4 symbols, and in the frequency domain, the PT-RS may be mapped (e.g. arranged, transmitted, or configured) at intervals of 2 or 4 resource blocks (RBs).

The PT-RS may be associated with a demodulation reference signal (DMRS) (e.g. DMRS port). In other words, the PT-RS may be transmitted along with the DMRS. The PT-RS and DMRS may be allocated to a PDSCH (e.g. PDSCH resource) and/or a PUSCH (e.g. PUSCH resource). The DMRS may be used to estimate channel values required for demodulation of data. In order to support ultra-high capacity communication services, ultra-wideband communication services, and/or ultra-low latency communication services, the communication system may use an unlicensed band within a mmWave band and/or a THz band.

Communication in high-frequency bands such as the mmWave band and the THz band may be carried out using a wide bandwidth, and in such cases, if a PT-RS frequency density (e.g. interval of 2 or 4 RBs) defined in the existing technical specifications is applied, waste of frequency resources may occur. In a PDSCH reception procedure, different frequency resources for PT-RSs may be allocated to terminals located within the same cell to prevent PT-RS collisions among the different terminals. In a communication system that includes MTRPs (hereinafter referred to as 'MTRP system'), if PT-RS frequency resources are allocated differently per cell, PT-RS collisions among MTRPs may not be prevented. Therefore, in an MTRP system supporting high-frequency bands, methods for allocating PT-RS frequency resources and methods for preventing PT-RS collisions among MTRPs may be required. For example, a new PT-RS design method for preventing PT-RS collisions among MTRPs and/or parameter(s) for a new PT-RS may be necessary.

The communication system may support MTRP-based communication procedures to enhance the performance and/or efficiency of multiple input multiple output (MIMO). A communication scheme (e.g. CJT scheme or NCJT scheme) of MTRPs may be determined based on an environment within a cell in which the TRPs exist, connectivity of backhaul links, and so on. When the CJT scheme is used, the MTRPs may provide communication services to a terminal through cooperation among the MTRPs. When the NCJT scheme is used, each TRP may independently provide communication services to the terminal. The communication system supporting a high-frequency band (e.g. an unlicensed band within a mmWave band or a THz band) may utilize MTRP technology. In such cases, a path loss problem may be resolved and high communication reliability may be achieved.

Multi-user (MU) MIMO may be utilized in high-frequency bands, and in such cases, enhancement techniques for reference signals of MTRPs may be necessary. For example, up to 24 DMRS ports may be supported. A DMRS port may be an orthogonal DMRS antenna port. The terminal may perform communication with one or more TRPs using multiple panels. An antenna port may refer to a logical antenna corresponding to the same channel. A panel may refer to an antenna port group, which is a set of multiple antenna ports. Alternatively, a panel may refer to an antenna group that includes one or more physical antennas (e.g. one or more physical antenna elements). MIMO enhancement techniques in a CJT MTRP system, MIMO enhancement techniques in an NCJT MTRP system, and MIMO enhancement techniques in a 52.6GHz to 71GHz band may be necessary. CJT MTRPs may refer to MTRPs that use the CJT scheme. NCJT MTRPs may refer to MTRPs that use the NCJT scheme.

In an MTRP system using a high-frequency band (e.g. a mmWave band and a THz band) MTRPs may support a single terminal. A communication node (e.g. a TRP, base station, or terminal) may determine PT-RS frequency resource(s) and may transmit PT-RS in the determined frequency resource(s). In such cases, PT-RS collisions among MTRPs may occur, and methods for preventing PT-RS collisions among the MTRPs may be necessary.

PT-RS may be introduced in an FR2 band to compensate for phase noise caused by an oscillator. The phase noise may change frequently over time. The change in phase noise with respect to frequency may be small. Therefore, the PT-RS may be allocated at a high density in the time domain, and the PT-RS may be allocated at a low density in the frequency domain. In the time domain, the allocation density of PT-RS may increase as an MCS index (e.g. MCS level) increases. In the frequency domain, the allocation density of PT-RS may increase as the number of scheduled RBs increases. According to the existing technical specifications, PT-RS may be allocated at intervals of 2 or 4 RBs in the frequency domain. In order to support communications that use a wide bandwidth (e.g. mmWave communication and THz communication), it may be necessary to set the allocation density (e.g. allocation interval) of PT-RS dynamically in the frequency domain.

The PT-RS may be associated with a DMRS. For example, a PT-RS port (e.g. PT-RS antenna port) may be associated with a DMRS port (e.g. DMRS antenna port). An antenna port of a PT-RS may be the lowest antenna port in a group of DMRS antenna ports that have a quasi-colocation (QCL) relation with the PT-RS. The maximum number of supported DMRS ports may be 24. In a communication system supporting a high-frequency band, a large number of antennas may be used, and the size of the antennas may increase. As a result, the number of antenna ports and/or panels experiencing different channels may increase. Phase noises in the antenna ports (or panels) may differ, and in order to achieve accurate measurements without interference among the antenna ports (or panels), additional allocation of PT-RS resources in the frequency domain may be necessary.

In a communication system (e.g. 5G communication system), an allocation pattern of PT-RS (e.g. allocation density, allocation interval) may be determined on a cell basis. When multiple TRPs exist within one cell, PT-RS collisions (e.g. PT-RS interference) among the multiple TRPs may occur. A design method for PT-RS to solve the above-described problem may be required. In the existing standards, PT-RS may not be distinguished per TRP, and PT-RS may be distinguished by a physical cell identifier (PCI) or an identifier set by an RRC layer. In a communication system supporting MTRP technology (e.g. a communication system in which multiple TRPs exist within one cell or a communication system supporting a high-frequency band), methods for distinguishing PT-RS per TRP and for allocating PT-RS while considering PT-RS collisions (e.g. PT-RS interference) among TRPs may be necessary.

Methods for designing PT-RS to compensate for phase noise and/or resolve PT-RS collisions in an MTRP system supporting a high-frequency band are proposed. To guarantee a orthogonal sequence of PT-RS, the minimum number of subcarriers allocated for PT-RS in the frequency domain may be determined, and based on a used frequency bandwidth (e.g. scheduled frequency bandwidth), a frequency resource density (e.g. frequency allocation density or frequency allocation interval) for PT-RS may also be determined. Once the frequency resource density and/or the number of frequency resources for PT-RS is determined, in a CJT MTRP system and/or NCJT MTRP system, a resource block (RB) offset and/or a resource element (RE) offset for PT-RS may be determined by considering a TRP ID, the frequency resource density of PT-RS, and/or frequency resource positions of PT-RSs for other TRPs. Although exemplary embodiments of the present disclosure are described with a focus on downlink communications, the exemplary embodiments may similarly or identically be applied to uplink communications.

PT-RS may be used to compensate for phase noise. In the frequency domain, PT-RS may be allocated to one resource element (RE) (e.g. one subcarrier) at intervals of 2 or 4 RBs. The position of PT-RS in the frequency domain may be defined based on Equation 1 below, where k may indicate a subcarrier to which PT-RS is allocated.

[Equation 1]

$$k = k_{ref}^{RE} + (iK_{PT-RS} + k_{ref}^{RB})N_{sc}^{RB}$$

$k_{ref}^{RE}$ may represent an RE offset of PT-RS (hereinafter referred to as 'PT-RS RE offset'), $K_{PT-RS}$ may represent a frequency density of PTRS (e.g. frequency resource density or frequency allocation density). $K_{PT-RS}$ may be referred to as 'PT-RS frequency density'. $N_{sc}^{RB}$ may be an RB offset of PT-RS (hereinafter referred to as 'PT-RS RB offset'). $N_{sc}^{RB}$ may denote the number of subcarriers within one RB. In the frequency domain, an RB to which the first PT-RS is mapped may be an RB after the PT-RS RB offset from a starting RB of a PDSCH or PUSCH. In the frequency domain, a subcarrier to which the first PT-RS is mapped may be a subcarrier after the PT-RS RE offset from a starting subcarrier of the RB (e.g. starting RB) to which the first PT-RS is mapped. A subcarrier to which the (n+1)-th PT-RS is mapped may be a subcarrier after $(K_{PT-RS})N_{sc}^{RB}$ subcarriers from a subcarrier to which the n-th PT-RS is mapped. n may be a natural number.

A frequency bandwidth used in a 6G communication system may be wider than that used in a 5G communication system. In this case, the number of antennas used in the 6G communication system may increase, and the number of panels experiencing different channels may also increase. Consequently, the number of phase noise components that need to be distinguished may increase. To compensate for phase noise more precisely, the allocation density of PT-RS may increase, and to support the wide frequency bandwidth, the PT-RS frequency density may be allocated dynamically.

Since the position of PT-RS in the 5G communication system is configured based on a radio network temporary identifier (RNTI) (e.g. MSC-cell (C)-RNTI, C-RNTI, configured scheduling (CS)-RNTI), if multiple TRPs transmit PT-RSs within the same cell, PT-RS collisions (i.e. PT-RS interference) may occur. In other words, interference among PT-RSs received at the terminal may occur. To prevent such interference, PT-RS RB offsets and/or PT-RS RE offsets of the TRPs may be set differently.

Methods for designing PT-RS to compensate for phase noise and/or to prevent PT-RS collisions are proposed when multiple TRPs communicate with a terminal (e.g. a single terminal) using the same frequency band in an MTRP system supporting a high-frequency band. The present disclosure may consider a scenario where multiple TRPs (e.g. three TRPs) with multiple panels provide communication services to a terminal (e.g. a single terminal). The three TRPs may be designated as a TRP A, TRP B, and TRP C. Exemplary embodiments of the present disclosure may be applied to both downlink and uplink communications.

The procedures proposed in the present disclosure may be as follows. The procedures below may be applied to a communication system that includes multiple TRPs, a communication system that supports an FR2 band or a frequency band higher than FR2, and/or a communication system that support a large number of panels or a large number of antenna port groups.

- Procedure 1: Each TRP may determine the minimum number of subcarriers for which PT-RS sequence orthogonality is guaranteed, based on its panels.
- Procedure 2: Each TRP may determine a PT-RS frequency density based on a used frequency bandwidth (e.g. scheduled frequency bandwidth) in an FR2 band or in a frequency band higher than FR2.
- Procedure 3: In a CJT MTRP system and/or NCJT MTRP system, a TRP (e.g. TRP B or TRP C) may transmit its TRP ID, information on the minimum number of subcarriers allocated for PT-RS (hereinafter referred to as 'the minimum number of PT-RS subcarriers'), and/or information on a PT-RS frequency density to a reference TRP (e.g. TRP A). Depending on a context, the PT-RS frequency density may be interpreted as either a frequency resource density or a time resource density for PT-RS.
- Procedure 4: Each TRP may transmit information on the minimum number PT-RS subcarriers and/or information on the PT-RS frequency density.
- Procedure 5: The reference TRP (e.g. TRP A) may determine PT-RS RB offsets and/or PT-RS RE offsets for all TRPs (e.g. TRP A, TRP B, and TRP C) based on the minimum numbers of PT-RS subcarriers and/or the PT-RS frequency densities of all TRPs (e.g. all TRPs participating in MTRP communication), and may then transmit information on the PT-RS RB offsets and/or PT-RS RE offsets to all TRPs. Each TRP's PT-RS RB offset and/or PT-RS RE offset may be set independently.
- Procedure 6: In downlink communications, each TRP may map PT-RS in the frequency domain based on the minimum number of PT-RS subcarriers, PT-RS frequency density, PT-RS RB offset, and/or PT-RS RE offset, and then transmit downlink signals/channels including the PT-RS, DMRS, and/or a PDSCH to the terminal.

The execution order of the procedures 1 to 6 may vary depending on a situation of the communication system. In the procedures 1 to 6, the operation of the reference TRP may be performed by a base station (or central unit (CU)) managing and/or controlling the MTRPs. For example, the base station may determine the PT-RS RB offsets and/or PT-RS RE offsets for all TRPs based on the minimum numbers of PT-RS subcarriers and/or PT-RS frequency densities of all TRPs, and then transmit the PT-RS RB offsets and/or PT-RS RE offsets to all TRPs.

In the CJT MTRP system, a procedure for information transfer among the TRPs may be performed via a backhaul (e.g. backhaul links). In the NCJT MTRP system, a procedure for information transfer among the TRPs may be performed via a base station and/or terminal. A communication scheme (e.g. transmission scheme) between a TRP and a terminal may differ depending on whether all TRPs are connected to the same base station or to different base stations. In the present disclosure, 'all TRPs' may refer to the TRPs participating in MTRP communications (e.g. TRP A, TRP B, and TRP C) or to all TRPs excluding the reference TRP. When all TRPs are connected to the base station, they may all deliver information to the terminal using RRC signaling.

When TRPs are connected to different base stations, the terminal may be in an RRC connected state with one base station. Assuming that the terminal is in an RRC connected state with a first base station to which the TRP A is connected, the terminal may be connected to a second base station to which the TRP B and TRP C are connected through a signaling radio bearer (SRB) (e.g. SRB3). In other words, the terminal may be in a multi-connectivity state with respect to both the first and second base stations. The terminal and the TRP B (or TRP C) may transmit and receive information (e.g. SN RRC reconfiguration, SN RRC reconfiguration complete, SN measurement reports, SN UE assistance information, etc.) through the SRB (e.g. SRB3).

**[Methods for determining the minimum number of PT-RS subcarriers and/or PT-RS frequency densities in MTRP system]**

In an MTRP system supporting a high-frequency band, multiple TRPs may communicate with a single terminal. PT-RS may be proposed to compensate for each TRP's phase noise and/or to prevent PT-RS collisions among TRPs. Each TRP may determine (or set) the minimum number of PT-RS subcarriers required to guarantee an orthogonal sequence of PT-RS, and each TRP may determine (or set) a PT-RS frequency density according to a used frequency bandwidth (e.g. scheduled frequency bandwidth).

If the number of orthogonal sequences of PT-RS is not sufficient to match the number of panels, the same PT-RS may be allocated even when different phase noises occur across the panels. In this case, the phase noises in the panels may not be adequately compensated. Since the frequency bandwidth increases as the frequency becomes higher, if a frequency band higher than FR2 is used, it may be necessary to dynamically set the PT-RS frequency density.

Table 2 below may represent the minimum number of PT-RS subcarriers according to the number of panels of the TRP. If the number of phase noise components that can be represented by a single subcarrier is determined, each TRP may determine the minimum number of PT-RS subcarriers required to represent the phase noises of all panels used for communication with the terminal based on the number of panels. The minimum number of PT-RS subcarriers may refer to the number of subcarriers occupied by PT-RS within a specific frequency band (e.g. within n RBs), where n is a natural number. The base station may transmit configuration information (e.g. PT-RS configuration information) that includes $OS_{PT-RS}$, $2OS_{PT-RS}$, $3OS_{PT-RS}$, and/or $4OS_{PT-RS}$ to the TRP(s) and/or the terminal through signaling. The TRP(s) and/or the terminal may identify $OS_{PT-RS}$, $2OS_{PT-RS}$, $3OS_{PT-RS}$, and/or $4OS_{PT-RS}$ as indicated by the signaling of the base station.

[Table 2]

| Number of panels in TRP (Nrofpanel) | Minimum number of PT-RS subcarriers ($SC_{PT-RS}$) |
|---|---|
| Nrofpanel $\leq OS_{PT-RS}$ | 1 |
| $OS_{PT-RS}$ < Nrofpanel $\leq 2OS_{PT-RS}$ | 2 |
| $2OS_{PT-RS}$ < Nrofpanel $\leq 3OS_{PT-RS}$ | 3 |
| $3OS_{PT-RS}$ < Nrofpanel $\leq 4OS_{PT-RS}$ | 4 |

Table 3 below may represent a PT-RS frequency density according to an allocated frequency bandwidth (e.g. scheduled frequency bandwidth). The allocated frequency bandwidth may refer to a frequency bandwidth allocated by the TRP to the terminal (e.g. frequency bandwidth scheduled by the TRP for the terminal). Each TRP may determine a PT-RS frequency density based on a frequency bandwidth used for communication with the terminal (e.g. allocated frequency bandwidth, scheduled frequency bandwidth). In other words, the PT-RS frequency density may be set according to a frequency bandwidth. The base station may transmit configuration information (e.g. PT-RS configuration information) including a BW #1, BW #2, BW #3, and/or BW #4 to TRP(s) and/or the terminal through signaling. The TRP(s) and/or terminal may identify the BW #1, BW #2, BW #3, and/or BW #4 indicated by the signaling of the base station.

[Table 3]

| Allocated frequency bandwidth ($BW_{UE}$) | PT-RS frequency density ($K_{PT-RS}$) |
|---|---|
| $BW_{UE}$ < BW #1 | $K_{PT-RS}$ #1 |
| BW #1 $\leq BW_{UE}$ < BW #2 | $K_{PT-RS}$ #2 |
| BW #2 $\leq BW_{UE}$ < BW #3 | $K_{PT-RS}$ #3 |
| BW #3 $\leq BW_{UE}$ < BW #4 | $K_{PT-RS}$ #4 |

The TRP (or base station) may determine an RB periodicity and/or the number of REs of PT-RS to compensate for phase noise occurring during communication with the terminal based on Tables 2 and 3. The number of REs of PT-RS may be the number of subcarriers occupied by PT-RS in the frequency domain. The RB periodicity and/or the number of REs of PT-RS may be represented by existing PT-RS parameters and/or new PT-RS parameters. Table 2 may represent the minimum number of PT-RS subcarriers allocated for PT-RS transmission in the frequency domain to sufficiently compensate for phase noise for each panel. Nrofpanel may refer to the number of panels in the TRP. $OS_{PT-RS}$ may refer to the number of orthogonal sequences of PT-RS that can be represented by a single subcarrier. $SC_{PT-RS}$ may refer to the minimum number of PT-RS subcarriers allocated in the frequency domain.

Since the panels may experience different phase noises, the number of orthogonal sequences of PT-RS may be equal to or greater than the number of panels in the TRP. Based on the above definition, the minimum number of PT-RS subcarriers in the frequency domain may be determined. In other words, $SC_{PT-RS}$ of the TRP may be determined based on the number of panels in the TRP. The maximum value of the minimum number of PT-RS subcarriers in Table 2 may be 4. The minimum number of PT-RS subcarriers may be set to various values. For example, the maximum value of the minimum number of PT-RS subcarriers may exceed 4. $SC_{PT-RS}$ may be determined based on the number of panels in the TRP.

If the number $OS_{PT-RS}$ of orthogonal sequences of PT-RS that can be represented by a single subcarrier is 4, and the number Nrofpanel of panels used by the TRP for communication with the terminal is 6, the TRP may determine the minimum number $SC_{PT-RS}$ of PT-RS subcarriers as 2 based on Table 2. In other words, the TRP may allocate PT-RS to the minimum PT-RS subcarriers corresponding to $\left\lceil \dfrac{\text{Nrofpanel}}{\text{OS}_{\text{PT-RS}}} \right\rceil$ subcarriers. The TRP may determine $SC_{\text{PT-RS}}$ based on Table 2. After the determination (e.g. configuration) of the minimum number of PT-RS subcarriers and PT-RS frequency density for each TRP is completed, the reference TRP (or base station) may determine the PT-RS RB offsets and/or PT-RS RE offsets of all TRPs using $SC_{\text{PT-RS}}$ and/or $K_{\text{PT-RS}}$.

In an environment where frequency bandwidths used by TRPs for communication with the terminal are not different (e.g. an environment where the TRPs share the same frequency bandwidth), phase noise may increase as the frequency increases. Referring to Table 3, the TRP may determine the PT-RS frequency density based on the frequency bandwidth used for communication with the terminal to appropriately compensate for phase noise. The TRP may determine the PT-RS frequency density by considering both the frequency bandwidth and an MCS index. In general, since an MCS with a high MCS index is applied to a wide frequency bandwidth, the criteria related to frequency bandwidths in the procedure described in Table 3 may be extended to criteria related to MCS.

The bandwidth (BW) #1 to BW #4 may represent reference frequency bandwidths. The reference frequency bandwidth may become wider from BW #1 to BW #4. Therefore, a value of BW may increase. $BW_{\text{UE}}$ may refer to the frequency bandwidth allocated by the TRP for communication with the terminal. $K_{\text{PT-RS}}$ may refer to the PT-RS frequency density. From $K_{\text{PT-RS \#1}}$ to $K_{\text{PT-RS \#4}}$, the PT-RS frequency density may decrease. In other words, from $K_{\text{PT-RS \#1}}$ to $K_{\text{PT-RS \#4}}$, the value of $K_{\text{PT-RS}}$ may increase. The value of $K_{\text{PT-RS}}$ may be an interval between frequency resources (e.g. subcarriers or RBs) to which PT-RS is mapped. The values of $K_{\text{PT-RS \#1}}$ to $K_{\text{PT-RS \#4}}$ may be variously set. For example, the values of $K_{\text{PT-RS \#1}}$ to $K_{\text{PT-RS \#4}}$ may be set as shown in Table 4 or Table 5.

[Table 4]

| PT-RS frequency density ($K_{\text{PT-RS}}$) | Value (e.g. SC interval or RB interval) |
|---|---|
| $K_{\text{PT-RS}}$ #1 | 2 |
| $K_{\text{PT-RS}}$ #2 | 4 |
| $K_{\text{PT-RS}}$ #3 | 6 |
| $K_{\text{PT-RS}}$ #4 | 8 |

[Table 5]

| PT-RS frequency density ($K_{\text{PT-RS}}$) | Value (e.g. SC interval or RB interval) |
|---|---|
| $K_{\text{PT-RS}}$ #1 | 2 |
| $K_{\text{PT-RS}}$ #2 | 4 |
| $K_{\text{PT-RS}}$ #3 | 8 |
| $K_{\text{PT-RS}}$ #4 | 16 |

To appropriately configure phase noise with minimal variation in the frequency domain, a lower PT-RS frequency density may be set as the TRP uses a wider frequency bandwidth. In other words, as the TRP uses a wider frequency bandwidth, the value of $K_{\text{PT-RS}}$ may increase. For example, if the frequency bandwidth $BW_{\text{UE}}$ allocated to the terminal satisfies 'BW #2 $\leq BW_{\text{UE}} <$ BW #3', the TRP may set the PT-RS frequency density to $K_{\text{PT-RS}}$ #4. In Table 3, the PT-RS frequency density may be determined based on the four reference frequency bandwidths (e.g. BW #1, BW #2, BW #3, BW #4). Various reference frequency bandwidths may be used to determine the PT-RS frequency density. For example, five or more reference frequency bandwidths may be used. After the configuration of the minimum number of PT-RS subcarriers and PT-RS frequency density for each TRP is completed, the reference TRP (or base station) may determine the PT-RS RB offsets and/or PT-RS RE offsets of all TRPs using the PT-RS frequency densities.

**[Method for allocating frequency resources of PT-RS based on backhaul in MTRP system]**

In an MTRP system, three TRPs with multiple panels (e.g. TRP A, TRP B, TRP C) may provide communication services to a single terminal. In this case, to prevent PT-RS collisions among the TRPs, frequency resources for PT-RSs of the TRPs may be configured not to overlap. For example, only one TRP may transmit PT-RS in a specific frequency resource. The reference TRP (or base station) may know the minimum numbers of PT-RS subcarriers and/or PT-RS frequency densities of all TRPs communicating with the terminal, and may determine PT-RS RB offsets $k_{\text{ref}}^{\text{RB}}$ and/or PT-RS RE offsets $k_{ref}^{RE}$ of all TRPs based on the minimum numbers of PT-RS subcarriers and/or PT-RS frequency densities. The reference TRP (or base station) may determine the frequency resources of PT-RS based on the PT-RS RB offsets and/or PT-RS RE offsets of all TRPs.

The backhaul among TRPs and/or between TRPs and the base station in the MTRP system may be configured, and the information exchange procedure among TRPs and/or the information exchange procedure between TRPs and the base station may be performed via the backhaul. The information defined in Tables 6 to 8 below may be exchanged via the backhaul. Table 6 may represent the information (e.g., information elements) transmitted among the TRPs. In the present disclosure, the backhaul may refer to the backhaul among the TRPs and/or the backhaul between the TRPs and the base station.

[Table 6]

| Transmission direction | Transmitting TRP ID | Delivered information |
|---|---|---|
| TRP B → TRP A | TRP ID (TRP $ID_B$) of TRP B | The minimum number of PT-RS subcarriers and/or PT-RS frequency density of TRP B |
| TRP C → TRP A | TRP ID (TRP $ID_C$) of TRP C | The minimum number of PT-RS subcarriers and/or PT-RS frequency density of TRP C |

In Table 6, a TRP (e.g. TRP B, TRP C) other than the reference TRP may determine the minimum number of PT-RS subcarriers (e.g. the minimum number of PT-RS subcarriers defined in Table 2) and/or PT-RS frequency density (e.g. PT-RS frequency density defined in Table 3), and may transmit a parameter set (e.g. information element(s)) including its own TRP ID (e.g. transmitting TRP ID), information on the minimum number of PT-RS subcarriers, and/or information on the PT-RS frequency density to the reference TRP. The parameter set may include one or more parameters or one or more information elements. The information may be transmitted via the backhaul among TRPs and/or the backhaul between TRPs and the base station. The reference TRP may receive the TRP IDs (e.g. transmission TRP IDs), information on the minimum numbers of PT-RS subcarriers, and/or information on PT-RS frequency densities from other TRP(s).

Table 7 may represent the PT-RS RB offset and PT-RS RE offset for each TRP. The TRP A may determine the PT-RS RB offset and/or PT-RS RE offset for each TRP so that PT-RS frequency resources among TRPs do not overlap based on the information obtained from the TRP B and TRP C (e.g., the minimum numbers of PT-RS subcarriers and/or PT-RS frequency densities) and the information of the TRP A (e.g. the minimum number of PT-RS subcarriers and/or PT-RS frequency density). Alternatively, the base station may determine the PT-RS RB offset and/or PT-RS RE offset for each TRP so that PT-RS frequency resources among TRPs do not overlap based on the information of the TRP A, TRP B, and TRP C (e.g. the minimum numbers of PT-RS subcarriers and/or PT-RS frequency densities).

[Table 7]

| | PT-RS RB offset ( $k_{ref}^{RB}$ ) | PT-RS RE offset ( $k_{ref}^{RE}$ ) |
|---|---|---|
| TRP A | $k_{ref}^{RB,A}$ | $k_{ref}^{RE,A}$ |
| TRP B | $k_{ref}^{RB,B}$ | $k_{ref}^{RE,B}$ |
| TRP C | $k_{ref}^{RB,C}$ | $k_{ref}^{RE,C}$ |

In Table 8, the reference TRP (e.g. TRP A) may transmit the PT-RS RB offset and/or PT-RS RE offset of each TRP (e.g. TRP B, TRP C) to each TRP. A parameter set (e.g. configuration information) including the PT-RS RB offset and/or PT-RS RE offset may be signaled to each TRP. The TRP B may receive its own PT-RS RB offset and/or PT-RS RE offset from the TRP A, and the TRP C may receive its own PT-RS RB offset and/or PT-RS RE offset from TRP A. Alternatively, the base station may transmit the PT-RS RB offset and/or PT-RS RE offset of each TRP (e.g. TRP A, TRP B, or TRP C) to each TRP.

[Table 8]

| Transmission direction | Receiving TRP ID | Delivered information |
|---|---|---|
| TRP A → TRP B | TRP ID (TRP ID$_B$) of TRP B | PT-RS RB offset and/or PT-RS RE offset of TRP B |
| TRP A → TRP C | TRP ID (TRP ID$_C$) of TRP C | PT-RS RB offset and/or PT-RS RE offset of TRP C |

Referring to Tables 6 to 8, in an MTRP system where three TRPs support a single terminal, the reference TRP (e.g. TRP A) may obtain information on the minimum numbers of PT-RS subcarriers and/or PT-RS frequency densities of all TRPs communicating with the terminal via the backhaul (e.g. the backhaul among TRPs and/or the backhaul between TRPs and the base station). The reference TRP may determine the PT-RS RB offset and/or PT-RS RE offset for each TRP based on the minimum numbers of PT-RS subcarriers and/or PT-RS frequency densities so that the PT-RS frequency resources of all TRPs do not overlap. The reference TRP may inform each TRP of the PT-RS RB offset and/or PT-RS RE offset via the backhaul (e.g. backhaul links). Each TRP may map PT-RS in the frequency domain and transmit PT-RS based on the PT-RS RB offset and/or PT-RS RE offset. In this case, PT-RS collisions among TRPs may not occur.

In Table 6, a TRP other than the reference TRP (e.g. TRP B, TRP C) may transmit its own information on the minimum number of PT-RS subcarriers and/or PT-RS frequency density to the reference TRP via the backhaul (e.g. backhaul link). A parameter set (e.g. information elements) including the information on the minimum number of PT-RS subcarriers and/or PT-RS frequency density may be signaled to the reference TRP. The TRP A may determine the minimum number of PT-RS subcarriers ($SC_{PT-RS,A}$) as shown in Table 2, and may determine the PT-RS frequency density ($K_{PT-RS,A}$) as shown in Table 3. The TRP B may determine the minimum number of PT-RS subcarriers ($SC_{PT-RS,B}$) as shown in Table 2, and may determine the PT-RS frequency density ($K_{PT-RS,B}$) as shown in Table 3. The TRP C may determine the minimum number of PT-RS subcarriers ($SC_{PT-RS,C}$) as shown in Table 2, and may determine the PT-RS frequency density ($K_{PT-RS,C}$) as shown in Table 3. $SC_{PT-RS,A}$, $SC_{PT-RS,B}$, and $SC_{PT-RS,C}$ may each have one of the values from 1 to 4. The reference frequency bandwidth for determining the PT-RS frequency density may differ for each TRP. $K_{PT-RS,A}$ may be one of $K_{PT-RS,A\#1}$ to $K_{PT-RS,A\#4}$. $K_{PT-RS,B}$ may be one of $K_{PT-RS,B\#1}$ to $K_{PT-RS,B\#4}$. $K_{PT-RS,C}$ may be one of $K_{PT-RS,C\#1}$ to $K_{PT-RS,C\#4}$.

In Table 6, the two TRPs (e.g. TRP B and TRP C) other than the reference TRP may each transmit the TRP ID, information on the minimum number of PT-RS subcarriers, and/or information on the PT-RS frequency density to the reference TRP. If the number of TRPs communicating with the terminal is two, one TRP other than the reference TRP may transmit the TRP ID, information on the minimum number of PT-RS subcarriers, and/or information on the PT-RS frequency density to the reference TRP according to Table 6. If the number of TRPs communicating with the terminal is four or more, each of the three or more TRPs other than the reference TRP may transmit the TRP ID, information on the minimum number of PT-RS subcarriers, and/or information on the PT-RS frequency density to the reference TRP according to Table 6.

To prevent a situation where PT-RS frequency resources allocated by the reference TRP (or base station) are insufficient or excessive compared to the required PT-RS frequency resources determined based on the number of panels, the number of orthogonal sequences, and/or the allocated frequency bandwidth, each TRP may transmit its own information on the minimum number of PT-RS subcarriers and/or PT-RS frequency density to the reference TRP (or base station) via the backhaul. The TRP A may receive the information on the minimum number of PT-RS subcarriers and/or PT-RS frequency density from each of the TRP B and TRP C. In Table 7, the TRP A may determine the PT-RS RB offsets and/or PT-RS RE offsets by comprehensively considering its own minimum number of PT-RS subcarriers and/or PT-RS frequency density and the minimum number of PT-RS subcarriers and/or PT-RS frequency density of each of TRP B and TRP C. The PT-RS RB offsets and/or PT-RS RE offsets may be used to determine the PT-RS frequency resources for the respective TRPs.

In Table 7, a reference point (e.g. reference RB) of the PT-RS RB offsets may be a starting RB of a frequency bandwidth (e.g. BWP) shared by the three TRPs, and a reference point (e.g. reference RE, reference subcarrier) of the PT-RS RE offsets may be a starting subcarrier of an RB determined based on the PT-RS RB offset. The reference points of the PT-RS RB offset and/or PT-RS RE offset may be variously configured. For example, the reference point of the PT-RS RB offset may be a starting RB of a PDSCH or PUSCH, and the PT-RS RE offset may be a starting subcarrier of the RB determined based on the PT-RS RB offset. To ensure that the PT-RS frequency resources of all TRPs communicating with the terminal do not overlap, the PT-RS RB offset and/or PT-RS RE offset of each TRP may be configured.

The PT-RS RB offset of TRP A may be $k_{ref}^{RB,A}$, and the PT-RS RE offset of TRP A may be $k_{ref}^{RE,A}$. The PT-RS RB offset of TRP B may be $k_{ref}^{RB,B}$, and the PT-RS RE offset of TRP B may be $k_{ref}^{RE,B}$. The PT-RS RB offset of TRP C may be $k_{ref}^{RB,C}$, and the PT-RS RE offset of TRP C may be $k_{ref}^{RE,C}$. The TRP A may identify an RB after $k_{ref}^{RB,A}$ from the reference RB in the frequency domain, and may map PT-RS from the identified RB at an interval of $K_{PT-SR,A}$. In other words, the TRP A may allocate PT-RS to the $(iK_{PT-SR,A} + k_{ref}^{RB,A})$-th RB. The value of i may be an integer greater than or equal to 0. The TRP A may identify a subcarrier after $k_{ref}^{RE,A}$ from a starting subcarrier of the RB where PT-RS is allocated, and may map PT-RS to continuous $SC_{PT-RS,A}$ subcarriers (e.g. continuous $SC_{PT-RS,A}$ REs) from the identified subcarrier. In other words, the TRP A may map PT-RS to the $(j+k_{ref}^{RE,A})$-th subcarrier (e.g. RE) within the RB where PT-RS is allocated. The value of j may be 0, 1, 2, ...., $SC_{PT-RS,A}$-1. Within the entire frequency bandwidth allocated to the TRP A, the position of RE (e.g. position of subcarrier) where the PT-RS of TRP A is transmitted, denoted as $k_A$, may be defined as shown in Equation 2 below.

[Equation 2]

$$k_A = \left(j + k_{ref}^{RE,A}\right) + \left(iK_{PT-RS,A} + k_{ref}^{RB,A}\right)N_{sc}^{RB},$$

$$j = 0,1,2,...,SC_{PT-RS,A} - 1, i = 0,1,2,...$$

Within the entire frequency bandwidth allocated to the TRP B, the position of RE (e.g. position of subcarrier) where the PT-RS of TRP B is transmitted, denoted as $k_B$, may be defined as shown in Equation 3 below.

[Equation 3]

$$k_B = \left(j + k_{ref}^{RE,B}\right) + \left(iK_{PT-RS,B} + k_{ref}^{RB,B}\right)N_{sc}^{RB},$$

$$j = 0,1,2,...,SC_{PT-RS,B} - 1, i = 0,1,2,...$$

Within the entire frequency bandwidth allocated to the TRP C, the position of RE (e.g. position of subcarrier) where the PT-RS of TRP C is transmitted, denoted as $k_C$, may be defined as shown in Equation 4 below.

[Equation 4]

$$k_C = \left(j + k_{ref}^{RE,C}\right) + \left(iK_{PT-RS,C} + k_{ref}^{RB,C}\right)N_{sc}^{RB},$$

$$j = 0,1,2,...,SC_{PT-RS,C} - 1, i = 0,1,2,...$$

The TRP A (or base station) may determine the PT-RS RB offset and/or PT-RS RE offset of each of the TRP A, TRP B, and TRP C based on the minimum number of PT-RS subcarriers and/or PT-RS frequency density of each of the TRP A, TRP B, and TRP C. The TRP A (or base station) may determine the PT-RS RB offset and/or PT-RS RE offset of each TRP such that $k_A$, $k_B$, and $k_C$ are not the same to prevent different TRPs from transmitting PT-RS in the same resource (e.g. the same frequency resource). In other words, to prevent the occurrence of PT-RS collisions among the TRPs, the TRP A (or base station) may determine the PT-RS RB offsets and/or PT-RS RE offsets of the respective TRPs such that $k_A$, $k_B$, and $k_C$ have different values.

Starting RBs of PDSCHs scheduled by the TRPs (hereinafter referred to as 'PDSCH starting RBs') may be the same. In this case, a subcarrier (e.g. RE) corresponding to $k_A$=0, a subcarrier (e.g. RE) corresponding to $k_B$=0, and a subcarrier (e.g. RE) corresponding to $k_C$=0 may be the same subcarrier (e.g. the same RE) in the frequency domain. Alternatively, the PDSCH starting RBs of the TRPs may not be the same. In this case, each TRP may transmit information on its PDSCH starting RB to the reference TRP (or base station). The information on the PDSCH starting RB may be transmitted along with information on the transmitting TRP ID, the minimum number of PT-RS subcarriers, and/or PT-RS frequency density. The reference TRP (e.g. TRP A) may determine the PT-RS RB offsets and/or PT-RS RE offsets of the respective TRPs such that PT-RS collisions do not occur across the TRPs, based on the PDSCH starting RBs, the minimum numbers of PT-RS subcarriers, and/or the PT-RS frequency densities of the respective TRPs.

In Table 8, the reference TRP (e.g. TRP A) may transmit a receiving TRP ID, PT-RS RB offset, and/or PT-RS RE offset to each TRP via the backhaul. The TRP A may transmit the TRP $ID_B$, $k_{ref}^{RB,B}$ and/or $k_{ref}^{RE,B}$ to the TRP B. The TRP A may transmit the TRP $ID_C$, $k_{ref}^{RB,C}$ and/or $k_{ref}^{RE,C}$ to the TRP C. Each TRP may identify its own PT-RS RB offset and/or PT-RS RE offset based on the receiving TRP ID (e.g. TRP $ID_B$ or TRP $ID_C$) received from the reference TRP. In other words, the TRP B may receive a message (e.g. signaling message) from the TRP A. The TRP B may determine that the information (e.g. PT-RS RB offset, and/or PT-RS RE offset) included in the message is its own information when the TRP ID included in the message is the TRP B's ID (e.g. TRP $ID_B$). The TRP C may receive a message (e.g. signaling message) from the TRP A. The TRP C may determine that the information (e.g., PT-RS RB offset, and/or PT-RS RE offset) included in the message is its own information when the TRP ID included in the message is the TRP C's ID (e.g. TRP $ID_C$). Each of the TRP B and TRP C may determine the position (e.g. $k_B$ or $k_C$) of the PT-RS frequency resource allocated to itself based on the minimum number of PT-RS subcarriers, PT-RS frequency density, PT-RS RB offset, and/or PT-RS RE offset.

To derive the position $k_B$ of the PT-RS frequency resource based on Equation 3, the TRP B may identify the parameters required in the aforementioned procedure, such as $SC_{PT-RS,B}$, $K_{PT-RS,B}$, $k_{ref}^{RB,B}$ and $k_{ref}^{RE,B}$. The TRP B may transmit PT-RS in the PT-RS frequency resource derived based on Equation 3. To derive the position $k_C$ of the PT-RS frequency resource based on Equation 4, the TRP C may identify the parameters required in the aforementioned procedure, such as $SC_{PT-RS,C}$, $K_{PT-RS,C}$, $k_{ref}^{RB,C}$ and $k_{ref}^{RE,C}$. The TRP C may transmit PT-RS in the PT-RS frequency resource derived based on Equation 4.

## [Method for allocating PT-RS frequency resources based on TRP information exchange mediated by a terminal in MTRP system]

In an MTRP system, a backhaul between TRPs and/or between a TRP and a base station may not exist. Alternatively, even when a backhaul exists in the MTRP system, transmission of information via the backhaul may not be possible due to specific reasons. In this case, information of TRPs may be transmitted via the terminal. For example, one TRP may transmit information (e.g. information element(s), parameter set) to the terminal, and the terminal may transmit the information received from the one TRP to other TRP(s). In the MTRP system, TRPs with multiple panels (e.g. three TRPs) may provide communication services to a single terminal. To prevent PT-RS collisions between TRPs, the TRP A may obtain information on the minimum numbers of PT-RS subcarriers and/or information on PT-RS frequency densities of all TRPs communicating with the terminal, and may determine the PT-RS RB offset and/or PT-RS RE offset of each TRP based on the minimum numbers of PT-RS subcarriers and/or PT-RS frequency densities, and may transmit the PT-RS RB offsets and/or PT-RS RE offsets to the respective TRPs.

If the information (e.g. information on the minimum number of PT-RS subcarriers, information on the PT-RS frequency density, PT-RS RB offset, and/or PT-RS RE offset) cannot be transmitted via the backhaul, the TRP may transmit the information to another TRP via the terminal according to a procedure below. In Table 9 below, each of the TRP B and TRP C may transmit its TRP ID (e.g. transmitting TRP ID), information on the minimum number of PT-RS subcarriers, and/or information on the PT-RS frequency density to the terminal. The terminal may receive the transmitting TRP ID, information on the minimum number of PT-RS subcarriers, and/or information on the PT-RS frequency density from each TRP.

[Table 9]

| Transmission direction | Transmitting TRP ID | Delivered information |
|---|---|---|
| TRP B → terminal | TRP ID (TRP $ID_B$) of TRP B | The minimum number of PT-RS subcarriers and/or PT-RS frequency density of TRP B |
| TRP C → terminal | TRP ID (TRP $ID_C$) of TRP C | The minimum number of PT-RS subcarriers and/or PT-RS frequency density of TRP C |

In Table 10 below, the terminal may transmit the information (e.g. TRP $ID_B$, information on the minimum number of PT-RS subcarriers, and/or information on the PT-RS frequency density) received from the TRP B to the TRP A, and the terminal may transmit the information (e.g. TRP $ID_C$, information on the minimum number of PT-RS subcarriers, and/or information on the PT-RS frequency density) received from the TRP C to the TRP A. The TRP A (e.g. reference TRP) may receive information (e.g. TRP ID, information on the minimum number of PT-RS subcarriers, and/or information on the PT-RS frequency density) of each TRP from the terminal.

[Table 10]

| Transmission direction | Transmitting TRP ID | Delivered information |
|---|---|---|
| Terminal → TRP A | TRP ID (TRP ID$_B$) of TRP B | The minimum number of PT-RS subcarriers and/or PT-RS frequency density of TRP B |
| Terminal → TRP A | TRP ID (TRP ID$_C$) of TRP C | The minimum number of PT-RS subcarriers and/or PT-RS frequency density of TRP C |

The TRP A may determine the PT-RS RB offset and/or PT-RS RE offset of each TRP such that the PT-RS frequency resources of TRPs communicating with the terminal do not overlap, based on the minimum numbers of PT-RS subcarriers and/or PT-RS frequency densities of the respective TRPs. In Table 11 below, the TRP A may transmit the PT-RS RB offset and/or PT-RS RE offset of the TRP B to the terminal, and the TRP A may transmit the PT-RS RB offset and/or PT-RS RE offset of the TRP C to the terminal. The terminal may receive the PT-RS RB offset and/or PT-RS RE offset of each of the TRP B and TRP C from the TRP A.

[Table 11]

| Transmission direction | Receiving TRP ID | Delivered information |
|---|---|---|
| TRP A → terminal | TRP ID (TRP ID$_B$) of TRP B | PT-RS RB offset and/or PT-RS RE offset of TRP B |
| TRP A → terminal | TRP ID (TRP ID$_C$) of TRP C | PT-RS RB offset and/or PT-RS RE offset of TRP C |

In Table 12 below, the terminal may transmit the information of the TRP B (e.g. TRP ID$_B$, PT-RS RB offset, and/or PT-RS RE offset) received from the TRP A to the TRP B, and the terminal may transmit the information of the TRP C (e.g. TRP ID$_C$, PT-RS RB offset, and/or PT-RS RE offset) received from the TRP A to the TRP C. The TRP B may receive the TRP ID$_B$, PT-RS RB offset, and/or PT-RS RE offset from the terminal. The TRP C may receive the TRP ID$_C$, PT-RS RB offset, and/or PT-RS RE offset from the terminal.

[Table 12]

| Transmission direction | Receiving TRP ID | Delivered information |
|---|---|---|
| Terminal → TRP B | TRP ID (TRP ID$_B$) of TRP B | PT-RS RB offset and/or PT-RS RE offset of TRP B |
| Terminal → TRP C | TRP ID (TRP ID$_C$) of TRP C | PT-RS RB offset and/or PT-RS RE offset of TRP C |

To enable the reference TRP (e.g. TRP A) to allocate appropriate PT-RS frequency resources by aggregating information from all TRPs communicating with the terminal, each of other TRPs (e.g. TRP B, TRP C) may transmit its own information (e.g. information on the minimum number of PT-RS subcarriers and/or information on the PT-RS frequency density) to the TRP A via the terminal. The reference TRP (e.g. TRP A) may determine PT-RS frequency resources of the respective TRPs based on the information of the respective TRPs (e.g. information on the minimum numbers of PT-RS subcarriers and/or PT-RS frequency densities) received from the terminal. In other words, the reference TRP may determine the PT-RS RB offset and/or PT-RS RE offset of each TRP communicating with the terminal. The reference TRP may transmit the PT-RS RB offset and/or PT-RS RE offset of each TRP to each TRP via the terminal.

In Table 9, the TRP B and TRP C may communicate with a single terminal, and each of the TRP B and TRP C may transmit its own information (e.g. TRP ID, information on the minimum number of PT-RS subcarriers, information on the PT-RS frequency density) to the terminal. The operation according to Table 9 may be performed when information transmission via the backhaul is not possible. If the number of TRPs communicating with the terminal is two, according to Table 9, one TRP other than the reference TRP may transmit its TRP ID, information on the minimum number of PT-RS subcarriers, and/or information on the PT-RS frequency density to the terminal. If the number of TRPs communicating with the terminal is four or more, according to Table 9, each of three or more TRPs other than the reference TRP may transmit its TRP ID, information on the minimum number of PT-RS subcarriers, and/or information on the PT-RS frequency density to the terminal.

When the TRP A, TRP B, and TRP C are connected to the same base station, each of the TRP B and TRP C may transmit its own information (e.g. TRP ID, information on the minimum number of PT-RS subcarriers, and/or information on the PT-RS frequency density) to the terminal through signaling. In the present disclosure, signaling may be refer to at least one of system information (SI) signaling, RRC signaling, MAC signaling, random access (RA) signaling, SRB signaling (e.g. SRB3 signaling), or PHY signaling. In the SI signaling, a system information block (SIB) may be transmitted. In the MAC signaling, a MAC control element (CE) may be transmitted. In the RA signaling, an Msg1, Msg2, Msg3, Msg4, MsgA, and/or MsgB may be transmitted. In the PHY signaling, downlink control information (DCI) may be transmitted. In the SRB signaling, a signaling message may be transmitted through an SRB (e.g. SRB3).

In Table 10, the terminal may transmit the information of the TRP B (e.g. TRP $ID_B$, information on the minimum number of PT-RS subcarriers, and/or information on the PT-RS frequency density) received from the TRP B to the TRP A, and the terminal may transmit the information of the TRP C (e.g. TRP $ID_C$, information on the minimum number of PT-RS subcarriers, and/or information on the PT-RS frequency density) received from the TRP C to the TRP A. The terminal may transmit the information of the TRP B and/or TRP C to the TRP A using a communication link (e.g. access link) between the terminal and the TRP A.

The TRP A may transmit a transmission request (e.g. report request) for information (e.g. TRP ID, information on the minimum number of PT-RS subcarriers, and/or information on the PT-RS frequency density) of another TRP to the terminal through signaling (e.g. RRC signaling). The transmission request for information of another TRP may be included in a UE information request, and the TRP A may transmit the UE information request to the terminal. After determining its own minimum number of PT-RS subcarriers and/or PT-RS frequency density, the TRP A may transmit a transmission request for information of another TRP to the terminal. The terminal may receive the transmission request for information of another TRP from the TRP A, and in response to the transmission request (e.g. UE information request), the terminal may transmit a UE transmission response to the TRP A. The UE transmission response may include information of another TRP (e.g. TRP ID, information on the minimum number of PT-RS subcarriers, and/or information on the PT-RS frequency density). As another method, the terminal may transmit another signaling message (e.g. UCI, UE assistance information, SN UE assistance information, RRC message, Msg1, MsgA) including information of another TRP (e.g. TRP ID, information on the minimum number of PT-RS subcarriers, and/or information on the PT-RS frequency density) to the TRP A. The another signaling message including information of another TRP may be transmitted through an SRB (e.g. SRB3).

The reference TRP (e.g. TRP A) may set the PT-RS RB offset and/or PT-RS RE offset of each TRP communicating with the terminal, based on its own information (e.g. information on the minimum number of PT-RS subcarriers and/or PT-RS frequency density) and the information of other TRPs (e.g. information on the minimum numbers of PT-RS subcarriers and/or information on the PT-RS frequency densities) received from the terminal. The reference TRP may derive $k_A$ based on Equation 2, derive $k_B$ based on Equation 3, and derive $k_C$ based on Equation 4.

In Table 11, the TRP A may transmit the information of the TRP B (e.g. TRP $ID_B$, PT-RS RB offset, and/or PT-RS RE offset) to the terminal, and the TRP A may transmit the information of the TRP C (e.g. TRP $ID_C$, PT-RS RB offset, and/or PT-RS RE offset) to the terminal. In other words, the information of the TRP B and TRP C may be signaled to the terminal. The signaling may be at least one of SI signaling, RRC signaling, MAC signaling, RA signaling, SRB signaling, or PHY signaling. The terminal may receive the information of the TRP B and TRP C from the TRP A.

In Table 12, the terminal may transmit the information of the TRP B (e.g. TRP $ID_B$, PT-RS RB offset, and/or PT-RS RE offset) received from the TRP A to the TRP B, and the terminal may transmit the information of the TRP C (e.g. TRP $ID_C$, PT-RS RB offset, and/or PT-RS RE offset) received from the TRP A to the TRP C. The TRP B may receive the TRP $ID_B$, PT-RS RB offset, and/or PT-RS RE offset from the terminal. The TRP C may receive the TRP $ID_C$, PT-RS RB offset, and/or PT-RS RE offset from the terminal.

The TRP B may receive the message (e.g., signaling message) from the terminal. The TRP B may determine that the information (e.g. PT-RS RB offset, and/or PT-RS RE offset) included in the message is its own information if the TRP ID included in the message is the TRP B's ID (e.g. TRP $ID_B$). The TRP C may receive the message (e.g. signaling message) from the terminal. The TRP C may determine that the information (e.g. PT-RS RB offset, and/or PT-RS RE offset) included in the message is its own information if the TRP ID included in the message is the TRP C's ID (e.g. TRP $ID_C$). Each of the TRP B and TRP C may determine the position (e.g. $k_B$ or $k_C$) of the allocated PT-RS frequency resource based on the minimum number of PT-RS subcarriers, PT-RS frequency density, PT-RS RB offset, and/or PT-RS RE offset.

If the number of TRPs communicating with the terminal is two, according to Table 12, the terminal may transmit the TRP ID, PT-RS RB offset, and/or PT-RS RE offset to one TRP. If the number of TRPs communicating with the terminal is four or more, according to Table 12, the terminal may transmit the TRP IDs, PT-RS RB offsets, and/or PT-RS RE offsets to three or more TRPs. If the TRP A, TRP B, and TRP C are connected to the same base station, the terminal may transmit information (e.g. TRP ID, PT-RS RB offset, and/or PT-RS RE offset) to each TRP using UCI, UE assistance information, and/or an RRC message. If the TRP A, TRP B, and TRP C are connected to different base stations, the terminal may transmit information (e.g. TRP ID, PT-RS RB offset, and/or PT-RS RE offset) to each TRP using an RA message (e.g. Msg1 or MsgA), UE assistance information, and/or an SRB signaling message (e.g. SRB3 signaling message).

The TRP B may identify the position of the PT-RS frequency resource based on the information (e.g. PT-RS RB offset and/or PT-RS RE offset) received from the terminal, and may transmit PT-RS at the identified position. The TRP C may identify the position of the PT-RS frequency resource based on the information (e.g. PT-RS RB offset and/or PT-RS RE offset) received from the terminal, and may transmit PT-RS at the identified position.

**[PT-RS transmission procedure in MTRP System]**

Based on the aforementioned methods, the PT-RS frequency resources of the TRPs may not overlap in the frequency domain, and PT-RS collisions among the TRPs may not occur. In Table 13 below, the TRP A may transmit PT-RS configuration information to the terminal, the TRP B may transmit PT-RS configuration information to the terminal, and the TRP C may transmit PT-RS configuration information to the terminal. The PT-RS configuration information may include at least one of a TRP ID, information on the minimum number of PT-RS subcarriers, information on a PT-RS frequency density, PT-RS RB offset, or PT-RS RE offset. Additionally, the PT-RS configuration information may include information element(s) to indicate the position of a PT-RS time resource.

[Table 13]

| Transmission direction | Delivered information |
|---|---|
| TRP A → terminal | PT-RS configuration information of TRP A |
| TRP B → terminal | PT-RS configuration information of TRP B |
| TRP C → terminal | PT-RS configuration information of TRP C |

The terminal may receive the PT-RS configuration information from each TRP and may identify the information (e.g. information elements, parameters) included in the PT-RS configuration information. The terminal may determine the position (i.e. $k_A$, $k_B$, or $k_C$) of the PT-RS frequency resource of each TRP based on the PT-RS configuration information. Additionally, the terminal may determine the position of the PT-RS time resource of each TRP based on the PT-RS configuration information. The TRP A may transmit PT-RS using physical resources indicated by the PT-RS configuration information, and the terminal may receive the PT-RS of the TRP A using the physical resources indicated by the PT-RS configuration information. The TRP B may transmit PT-RS using physical resources indicated by the PT-RS configuration information, and the terminal may receive the PT-RS of the TRP B using the physical resources indicated by the PT-RS configuration information. The TRP C may transmit PT-RS using physical resources indicated by the PT-RS configuration information, and the terminal may receive the PT-RS of the TRP C using the physical resources indicated by the PT-RS configuration information.

As another method, the base station may transmit PT-RS configuration information to the terminal. The PT-RS configuration information may be transmitted to the terminal via at least one TRP connected to the base station. Additionally, the base station may transmit PT-RS configuration information of each TRP to each TRP. The PT-RS configuration information transmitted by the base station may include information elements defined in Tables 14 to 16 below. The PT-RS configuration information may be a parameter set for PT-RS configuration.

[Table 14]

| PT-RS configuration information | | |
|---|---|---|
| TRP A information | TRP ID$_A$ | |
| | | [Frequency resource information]<br>The minimum number of PT-RS subcarriers<br>PT-RS frequency density<br>PT-RS RB offset<br>PT-RS RE offset |
| | | [Time resource information]<br>PT-RS time density (ptrs-MCS)<br>PT-RS time offset ($L_{PT-RS}$) |

[Table 15]

| PT-RS configuration information | | |
|---|---|---|
| TRP B information | TRP ID$_B$ | |
| | | [Frequency resource information]<br>The minimum number of PT-RS subcarriers<br>PT-RS frequency density<br>PT-RS RB offset<br>PT-RS RE offset |
| | | [Time resource information]<br>PT-RS time density (ptrs-MCS)<br>PT-RS time offset (L$_{PT-RS}$) |

[Table 16]

| PT-RS configuration information | | |
|---|---|---|
| TRP C information | TRP IDc | |
| | | [Frequency resource information]<br>The minimum number of PT-RS subcarriers<br>PT-RS frequency density<br>PT-RS RB offset<br>PT-RS RE offset |
| | | [Time resource information]<br>PT-RS time density (ptrs-MCS)<br>PT-RS time offset (L$_{PT-RS}$) |

PT-RSs transmitted via different panels of the same TRP may be orthogonal. As a frequency bandwidth increases, a gap between PT-RSs in the frequency domain may increase. Since the PT-RS resources (e.g. PT-RS frequency resources) of the TRPs do not overlap, the TRPs may not transmit PT-RS to the terminal in the same physical resource. The TRP A may transmit a *PTRS-DownlinkConfig* including the PT-RS configuration information to the terminal. Alternatively, the TRP A may signal the PT-RS configuration information to the terminal by other means. The signaling may be at least one of SI signaling, RRC signaling, MAC signaling, RA signaling, SRB signaling, or PHY signaling.

If the TRP A, TRP B, and TRP C are connected to the same base station, each of the TRP B and TRP C may transmit a *PTRS-DownlinkConfig* including PT-RS configuration information to the terminal. Alternatively, each of the TRP B and TRP C may signal the PT-RS configuration information to the terminal by other means. The signaling may be at least one of SI signaling, RRC signaling, MAC signaling, RA signaling, SRB signaling, or PHY signaling.

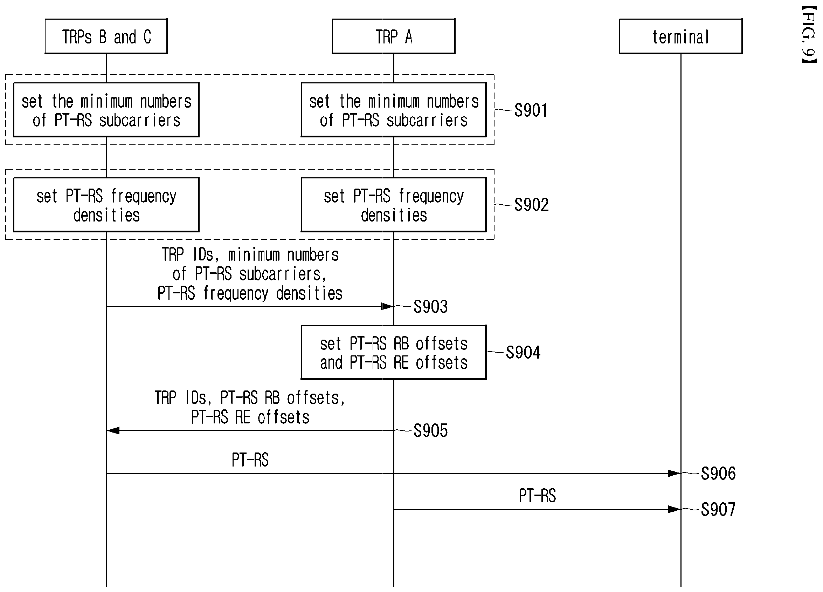

FIG. 9 is a sequence chart illustrating a first exemplary embodiment of a method for PT-RS configuration and transmission.

As shown in FIG. 9, three TRPs (e.g. TRP A, TRP B, TRP C) may provide communication services to a terminal. In other words, the three TRPs may perform MTRP communication. The TRP A may be a reference TRP that performs MTRP communication. The TRP B and TRP C may be participating TRPs that participate in the MTRP communication. The exemplary embodiment of FIG. 9 may be performed when a backhaul between TRPs and/or a backhaul between TRPs and the base station is configured.

In step S901, each of the TRPs may determine the minimum number of PT-RS subcarriers based on Table 2. The minimum number of PT-RS subcarriers may refer to the number of consecutive subcarriers in the frequency domain. In step S902, each of the TRPs may determine the PT-RS frequency density based on Table 3. In step S903, each of the TRP B and TRP C may transmit information such as TRP ID, information on the minimum number of PT-RS subcarriers, and/or information on the PT-RS frequency density to the TRP A. In other words, a parameter set including the TRP ID, information on the minimum number of PT-RS subcarriers, and/or information on the PT-RS frequency density may be signaled to the TRP A. The TRP A may receive the TRP ID, information on the minimum number of PT-RS subcarriers, and/or information on the PT-RS frequency density from each of the TRP B and TRP C. Step S903 may be performed based on at least one of SI signaling, RRC signaling, MAC signaling, or PHY signaling.

In step S904, the TRP A may set (e.g. determine) the PT-RS RB offset and/or PT-RS RE offset of each TRP based on the information of the TRPs (e.g. information on the minimum numbers of PT-RS subcarriers and/or PT-RS frequency densities). For example, the TRP A may set the PT-RS RB offset and/or PT-RS RE offset of each TRP as shown in Table 7. In step S905, the TRP A may transmit PT-RS configuration information (e.g. TRP ID, PT-RS RB offset, and/or PT-RS RE offset) to each TRP. Each of the TRP B and TRP C may receive the PT-RS configuration information (e.g. TRP ID, PT-RS RB offset, and/or PT-RS RE offset) from the TRP A. Additionally, the TRP A may transmit the PT-RS configuration information (e.g., TRP ID, information on the minimum number of PT-RS subcarriers, information on the PT-RS frequency density, PT-RS RB offset, and/or PT-RS RE offset) of each TRP to the terminal. The terminal may receive the PT-RS configuration information (e.g. TRP ID, information on the minimum number of PT-RS subcarriers, information on the PT-RS frequency density, PT-RS RB offset, and/or PT-RS RE offset) of each TRP from the TRP A. The PT-RS configuration information may include information elements defined in Tables 14 to 16. Step S905 may be performed based on at least one of SI signaling, RRC signaling, MAC signaling, or PHY signaling.

As another method, the TRP A may determine the position $k_B$ or $k_C$ of the PT-RS frequency resource of each TRP, and in step S905, the TRP A may indicate the position $k_B$ or $k_C$ of the PT-RS frequency resource and/or the position of the PT-RS time resource to each of the TRP B and TRP C. Each of the TRP B and TRP C may identify the position $k_B$ or $k_C$ of the PT-RS frequency resource and/or the position of the PT-RS time resource as indicated by the TRP A. Additionally, the TRP A may indicate the position $k_A$, $k_B$ or $k_C$ of the PT-RS frequency resource and/or the position of the PT-RS time resource of each TRP to the terminal. The terminal may identify the position $k_A$, $k_B$ or $k_C$ of the PT-RS frequency resource and/or the position of the PT-RS time resource as indicated by the TRP A.

The TRP B may identify the position $k_B$ of the PT-RS frequency resource based on the PT-RS configuration information received from the TRP A. For example, the TRP B may derive the position $k_B$ of the PT-RS frequency resource based on Equation 3. Additionally, the TRP B may determine the position of the PT-RS time resource based on the PT-RS configuration information received from the TRP A. In step S906, the TRP B may transmit PT-RS using the identified physical resource (e.g. time resource and/or frequency resource). The TRP C may determine the position $k_C$ of the PT-RS frequency resource based on the PT-RS configuration information received from the TRP A. For example, the TRP C may derive the position $k_C$ of the PT-RS frequency resource based on Equation 4. Additionally, the TRP C may determine the position of the PT-RS time resource based on the PT-RS configuration information received from the TRP A. In step S906, the TRP C may transmit PT-RS using the identified physical resource (e.g. time resource and/or frequency resource).

The TRP A may derive the position $k_A$ of the PT-RS frequency resource based on Equation 2. Additionally, the TRP A may identify the position of the PT-RS time resource. In step S907, the TRP A may transmit PT-RS using the identified physical resource. The terminal may identify the physical resources in which PT-RS is transmitted based on the PT-RS configuration information or the PT-RS physical resource position information received from the TRP A, and may receive the PT-RS of each TRP using the identified physical resources. The terminal may compensate for phase noise based on measurement results of the PT-RSs.

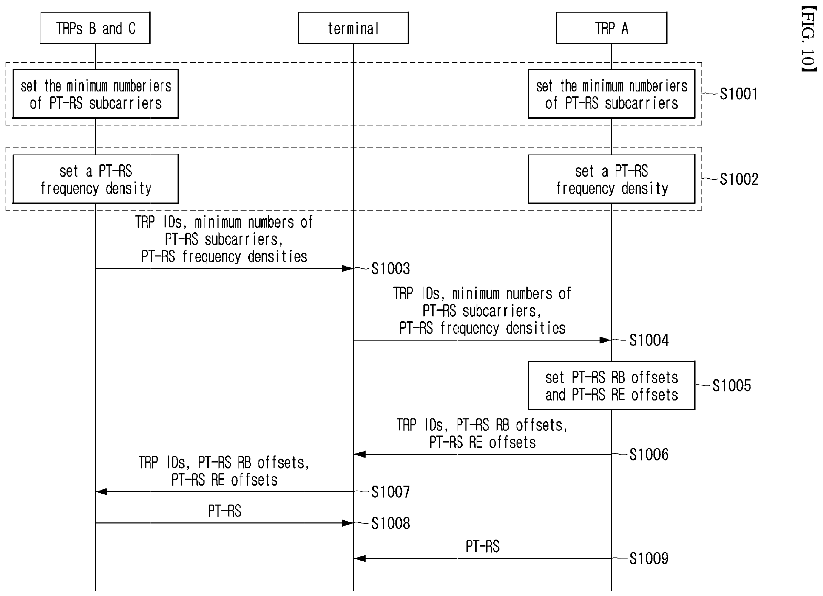

FIG. 10 is a sequence chart illustrating a second exemplary embodiment of a method for PT-RS configuration and transmission.

As shown in FIG. 10, three TRPs (e.g. TRP A, TRP B, TRP C) may provide communication services to a terminal. In other words, the three TRPs may perform MTRP communication. The TRP A may be a reference TRP that performs MTRP communication. The TRP B and TRP C may be participating TRPs that participate in the MTRP communication. The exemplary embodiment of FIG. 10 may be performed when a backhaul between TRPs and/or a backhaul between TRPs and the base station is not configured.

In step S1001, each of the TRPs may determine the minimum number of PT-RS subcarriers based on Table 2. The minimum number of PT-RS subcarriers may refer to the number of consecutive subcarriers in the frequency domain. In step S1002, each of the TRPs may determine the PT-RS frequency density based on Table 3. In step S1003, each of the TRP B and TRP C may transmit information such as TRP ID, information on the minimum number of PT-RS subcarriers, and/or information on the PT-RS frequency density to the terminal. In other words, a parameter set including the TRP ID, information on the minimum number of PT-RS subcarriers, and/or information on the PT-RS frequency density may be signaled through a link between each TRP and the terminal. The terminal may receive the TRP ID, information on the minimum number of PT-RS subcarriers, and/or information on the PT-RS frequency density from each of the TRP B and TRP C. In step S1004, the terminal may transmit the information of each of the TRP B and TRP C (e.g. TRP ID, information on the minimum number of PT-RS subcarriers, and/or information on the PT-RS frequency density) to the TRP A. In other words, the information of each of the TRP B and TRP C may be signaled through the link between the TRP A and the terminal. The TRP A may receive the information of each of the TRP B and TRP C (e.g. TRP ID, information on the minimum number of PT-RS subcarriers, and/or information on the PT-RS frequency density) from the terminal. Steps S1003 and S1004 may be performed based on at least one of SI signaling, RRC signaling, MAC signaling, or PHY signaling.

In step S1005, the TRP A may set (e.g. determine) a PT-RS RB offset and/or PT-RS RE offset of each TRP based on the information of the TRPs (e.g. information regarding the minimum numbers of PT-RS subcarriers and/or PT-RS frequency densities). For example, the TRP A may set the PT-RS RB offset and/or PT-RS RE offset of each TRP as shown in Table 7. In step S1006, the TRP A may transmit PT-RS configuration information (e.g. TRP ID, PT-RS RB offset, and/or PT-RS RE offset) of each TRP to the terminal. In other words, the PT-RS configuration information may be signaled through the link between the TRP A and the terminal. The PT-RS configuration information transmitted to the terminal may include not only the PT-RS configuration information of the TRP B and TRP C but also the PT-RS configuration information of the TRP A. The terminal may receive the PT-RS configuration information (e.g. TRP ID, PT-RS RB offset, and/or PT-RS RE offset) of each TRP from the TRP A. In step S1007, the terminal may transmit the PT-RS configuration information (e.g. TRP ID, PT-RS RB offset, and/or PT-RS RE offset) to each of the TRP B and TRP C. In other words, the PT-RS configuration information may be signaled through the link between the terminal and each TRP. Each of the TRP B and TRP C may receive the PT-RS configuration information (e.g. TRP ID, PT-RS RB offset, and/or PT-RS RE offset) from the terminal. The PT-RS configuration information may include the information element(s) defined in Tables 14 to 16. Steps S1006 and S1007 may be performed based on at least one of SI signaling, RRC signaling, MAC signaling, or PHY signaling.

As another method, the TRP A may determine the positions $k_A$, $k_A$, and $k_C$ of the PT-RS frequency resources of the respective TRPs, and in step S1006, the TRP A may inform the terminal of the positions $k_A$, $k_A$, and $k_C$ of the PT-RS frequency resources and/or the positions of the PT-RS time resources. In step S1007, the terminal may inform each of the TRP B and TRP C of the positions $k_A$, $k_A$, and $k_C$ of the PT-RS frequency resources and/or the positions of the PT-RS time resources. Each of the TRP B and TRP C may identify the positions $k_A$, $k_A$, and $k_C$ of the PT-RS frequency resources and/or the positions of the PT-RS time resources as indicated by the terminal.

The TRP B may identify the position $k_B$ of the PT-RS frequency resource based on the PT-RS configuration information received from the terminal. For example, the TRP B may derive the position $k_B$ of the PT-RS frequency resource based on Equation 3. Additionally, the TRP B may identify the position of the PT-RS time resource based on the PT-RS configuration information received from the terminal. In step S1008, the TRP B may transmit PT-RS using the identified physical resource (e.g., time resource and/or frequency resource). The TRP C may identify the position $k_C$ of the PT-RS frequency resource based on the PT-RS configuration information received from the terminal. For example, the TRP C may derive the position $k_C$ of the PT-RS frequency resource based on Equation 4. Additionally, the TRP C may identify the position of the PT-RS time resource based on the PT-RS configuration information received from the terminal. In step S1008, the TRP C may transmit PT-RS using the identified physical resource (e.g., time resource and/or frequency resource).

The TRP A may derive the position $k_A$ of the PT-RS frequency resource based on Equation 2. Additionally, the TRP A may identify the position of the PT-RS time resource. In step S1009, the TRP A may transmit PT-RS using the identified physical resource. The terminal may identify the physical resources in which PT-RS is transmitted based on the PT-RS configuration information or the PT-RS physical resource position information received from the TRP A, and may receive the PT-RSs of the respective TRPs using the identified physical resources. The terminal may compensate for phase noise based on measurement results of the PT-RSs.

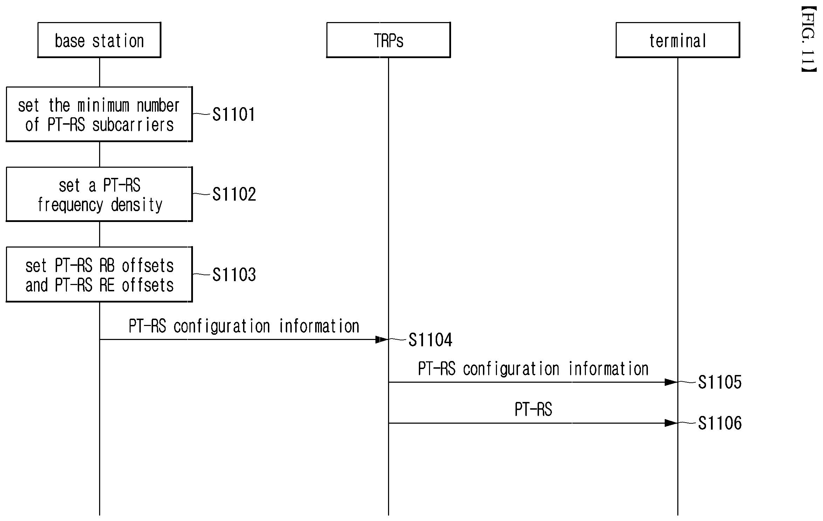

FIG. 11 is a sequence chart illustrating a third exemplary embodiment of a method for PT-RS configuration and transmission.

As shown in FIG. 11, a base station may be connected to multiple TRPs (e.g. TRP A, TRP B, TRP C), and the base station may provide communication services to a terminal using multiple TRPs. In other words, the multiple TRPs may perform MTRP communication. The base station may be a serving cell. In step S1101, the base station may determine the minimum number of PT-RS subcarriers of each TRP based on Table 2. The minimum number of PT-RS subcarriers may refer to the number of consecutive subcarriers in the frequency domain. In step S1102, the base station may determine a PT-RS frequency density of each TRP based on Table 3. Additionally, the base station may determine a PT-RS time density of each TRP.

In step S1103, the base station may set (e.g. determine) a PT-RS RB offset and/or PT-RS RE offset of each TRP based on the minimum number of PT-RS subcarriers and/or PT-RS frequency density. For example, the base station may set the PT-RS RB offset and/or PT-RS RE offset of each TRP as shown in Table 7. Additionally, the base station may determine the PT-RS time offsets to ensure that the PT-RSs of the TRPs do not overlap in the time domain. The PT-RS time offset may be independently set for each TRP. In other words, the PT-RS time offsets of the TRPs may be set differently. The PT-RS time offset may indicate the first symbol of a time region (e.g. slot) to which PT-RS is mapped in the time domain. In step S1104, the base station may transmit PT-RS configuration information (e.g. TRP ID, information on the minimum number of PT-RS subcarriers, information on the PT-RS frequency density, PT-RS RB offset, PT-RS RE offset, information on the PT-RS time density, and/or PT-RS time offset) to each TRP. The PT-RS configuration information may include the information elements defined in Tables 14 to 16. Each TRP may receive the PT-RS configuration information (e.g. TRP ID, information on the minimum number of PT-RS subcarriers, information on the PT-RS frequency density, PT-RS RB offset, PT-RS RE offset, information on the PT-RS time density, and/or PT-RS time offset) from the base station. In step S1105, at least one TRP may transmit the PT-RS configuration information (e.g. TRP ID, information on the minimum number of PT-RS subcarriers, information on the PT-RS frequency density, PT-RS RB offset, PT-RS RE offset, information on the PT-RS time density, and/or PT-RS time offset) to the terminal. The terminal may receive the PT-RS configuration information (e.g. TRP ID, information on the minimum number of PT-RS subcarriers, information on the PT-RS frequency density, PT-RS RB offset, PT-RS RE offset, information on the PT-RS time density, and/or PT-RS time offset) from at least one TRP. Steps S1104 and S1105 may be performed based on at least one of SI signaling, RRC signaling, MAC signaling, or PHY signaling.

Each TRP may identify the PT-RS frequency resource and/or PT-RS time resource based on the PT-RS configuration information received from the base station. For example, the respective TRPs may determine the positions $k_A$, $k_A$, and $k_C$ of the PT-RS frequency resources based on Equations 2 to 4. The terminal may identify the PT-RS frequency resources and/or PT-RS time resources based on the PT-RS configuration information received from at least one TRP. For example, the terminal may determine the positions $k_A$, $k_A$, and $k_C$ of the PT-RS frequency resources based on Equations 2 to 4. In step S1106, each TRP may transmit PT-RS using the physical resources. The terminal may receive the PT-RSs using the physical resources and may compensate for phase noise (e.g. phase error) based on the PT-RSs.

A simple combination, partial combination, and/or extended combination of the aforementioned methods may be applicable. The operations of the method according to the exemplary embodiment of the present disclosure can be implemented as a computer readable program or code in a computer readable recording medium. The computer readable recording medium may include all kinds of recording apparatus for storing data which can be read by a computer system. Furthermore, the computer readable recording medium may store and execute programs or codes which can be distributed in computer systems connected through a network and read through computers in a distributed manner.

The computer readable recording medium may include a hardware apparatus which is specifically configured to store and execute a program command, such as a ROM, RAM or flash memory. The program command may include not only machine language codes created by a compiler, but also high-level language codes which can be executed by a computer using an interpreter.

Although some aspects of the present disclosure have been described in the context of the apparatus, the aspects may indicate the corresponding descriptions according to the method, and the blocks or apparatus may correspond to the steps of the method or the features of the steps. Similarly, the aspects described in the context of the method may be expressed as the features of the corresponding blocks or items or the corresponding apparatus. Some or all of the steps of the method may be executed by (or using) a hardware apparatus such as a microprocessor, a programmable computer or an electronic circuit. In some embodiments, one or more of the most important steps of the method may be executed by such an apparatus.

In some exemplary embodiments, a programmable logic device such as a field-programmable gate array may be used to perform some or all of functions of the methods described herein. In some exemplary embodiments, the field-programmable gate array may be operated with a microprocessor to perform one of the methods described herein. In general, the methods are preferably performed by a certain hardware device.

The description of the disclosure is merely exemplary in nature and, thus, variations that do not depart from the substance of the disclosure are intended to be within the scope of the disclosure. Such variations are not to be regarded as a departure from the spirit and scope of the disclosure. Thus, it will be understood by those of ordinary skill in the art that various changes in form and details may be made without departing from the spirit and scope as defined by the following claims.

## Claims

1. A method of a first transmission and reception point (TRP), comprising:

   configuring a first parameter set for determining a first phase tracking-reference signal (PT-RS) resource of the first TRP;
   configuring a second parameter set for determining a second PT-RS resource of a second TRP so that the first PT-RS resource and the second PT-RS resource do not overlap;
   transmitting the second parameter set to the second TRP; and
   transmitting a first PT-RS to a terminal in the first PT-RS resource determined based on the first parameter set.

2. The method according to claim 1,

   wherein the first parameter set includes at least one of a first PT-RS resource block (RB) offset or a first PT-RS resource element (RE) offset, the first PT-RS RB offset is an RB offset between a first reference RB and a first starting RB to which the first PT-RS is mapped, and the first PT-RS RE offset is an RE offset between a first subcarrier and a first starting subcarrier to which the first PT-RS is mapped within the first starting RB, and
   wherein the second parameter set includes at least one of a second PT-RS RB offset or a second PT-RS RE offset, the second PT-RS RB offset is an RB offset between a second reference RB and a second starting RB to which the second PT-RS is mapped, and the second PT-RS RE offset is an RE offset between a first subcarrier and a second starting subcarrier to which the second PT-RS is mapped within the second starting RB.

**EP 4 586 535 A1**

3. The method according to claim 2, wherein the first reference RB is a first RB within a first frequency band allocated to the first TRP, and the second reference RB is a first RB within a second frequency band allocated to the second TRP.

4. The method according to claim 1, further comprising:

setting a first minimum number of PT-RS subcarriers; and
setting a first PT-RS frequency density,
wherein the first parameter set is configured considering at least one of the first minimum number of PT-RS subcarriers or the first PT-RS frequency density, the first minimum number of PT-RS subcarriers is a number of consecutive subcarriers to which the first PT-RS is mapped in a frequency band, and the first PT-RS frequency density is a mapping interval of the first PT-RS in frequency domain.

5. The method according to claim 4, wherein the first minimum number of PT-RS subcarriers is set based on a result of comparison between a number of panels of the first TRP and a number of orthogonal sequences of the first PT-RS.

6. The method according to claim 4, wherein the first PT-RS frequency density is set based on a result of comparison between a frequency bandwidth allocated to the terminal by the first TRP and a reference frequency bandwidth.

7. The method according to claim 1, further comprising: receiving, from the second TRP, at least one of information of a second minimum number of PT-RS subcarriers or information of a second PT-RS frequency density, wherein the second parameter set is configured considering at least one of the second minimum number of PT-RS subcarriers or the second PT-RS frequency density, the second minimum number of PT-RS subcarriers is a number of consecutive subcarriers to which the second PT-RS is mapped in a frequency band, and the second PT-RS frequency density is a mapping interval of the second PT-RS in frequency domain.

8. The method according to claim 1, further comprising: transmitting the first parameter set and the second parameter set to the terminal.

9. The method according to claim 1, wherein the second parameter set is transmitted and received through a backhaul link between the first TRP and the second TRP or transmitted and received through a first link between the first TRP and the terminal and a second link between the terminal and the second TRP.

10. A method of a second transmission and reception point (TRP), comprising:

configuring one or more information elements considered for determining a second phase tracking-reference signal resource of the second TRP;
transmitting the one or more information elements to a first TRP;
receiving a second parameter set for determining the second PT-RS resource from the first TRP; and
transmitting a second PT-RS to a terminal in the second PT-RS resource determined based on the second parameter set,
wherein the second parameter set is configured considering the one or more information elements, and the second PT-RS resource is configured so as not to overlap with a first PT-RS resource of the first TRP.

11. The method according to claim 10, wherein the one or more information elements include at least one of information of a second minimum number of PT-RS subcarriers or information of a second PT-RS frequency density, the second minimum number of PT-RS subcarriers is a number of consecutive subcarriers to which the second PT-RS is mapped in a frequency band, and the second PT-RS frequency density is a mapping interval of the second PT-RS in frequency domain.

12. The method according to claim 11, wherein the second minimum number of PT-RS subcarriers is set based on a result of comparison between a number of panels of the second TRP and a number of orthogonal sequences of the second PT-RS.

13. The method according to claim 11, wherein the second PT-RS frequency density is set based on a result of comparison between a frequency bandwidth allocated to the terminal by the second TRP and a reference frequency bandwidth.

14. The method according to claim 10, wherein the second parameter set includes at least one of a second PT-RS resource block (RB) offset or a second PT-RS resource element (RE) offset, the second PT-RS RB offset is an RB

28

offset between a second reference RB and a second starting RB to which the second PT-RS is mapped, and the second PT-RS RE offset is an RE offset between a first subcarrier and a second starting subcarrier to which the second PT-RS is mapped within the second starting RB.

15. The method according to claim 10, wherein the one or more information elements and the second parameter set are transmitted and received through a backhaul link between the first TRP and the second TRP or transmitted and received through a first link between the first TRP and the terminal and a second link between the terminal and the second TRP.

16. A first transmission and reception point (TRP), comprising at least one processor, wherein the at least one processor causes the first TRP to perform:

configuring a first parameter set for determining a first phase tracking-reference signal (PT-RS) resource of the first TRP;
configuring a second parameter set for determining a second PT-RS resource of a second TRP so that the first PT-RS resource and the second PT-RS resource do not overlap;
transmitting the second parameter set to the second TRP; and
transmitting a first PT-RS to a terminal in the first PT-RS resource determined based on the first parameter set.

17. The first TRP according to claim 16,

wherein the first parameter set includes at least one of a first PT-RS resource block (RB) offset or a first PT-RS resource element (RE) offset, the first PT-RS RB offset is an RB offset between a first reference RB and a first starting RB to which the first PT-RS is mapped, and the first PT-RS RE offset is an RE offset between a first subcarrier and a first starting subcarrier to which the first PT-RS is mapped within the first starting RB, and wherein the second parameter set includes at least one of a second PT-RS RB offset or a second PT-RS RE offset, the second PT-RS RB offset is an RB offset between a second reference RB and a second starting RB to which the second PT-RS is mapped, and the second PT-RS RE offset is an RE offset between a first subcarrier and a second starting subcarrier to which the second PT-RS is mapped within the second starting RB.

18. The first TRP according to claim 16, wherein the at least one processor further causes the first TRP to perform:

setting a first minimum number of PT-RS subcarriers; and
setting a first PT-RS frequency density,
wherein the first parameter set is configured considering at least one of the first minimum number of PT-RS subcarriers or the first PT-RS frequency density, the first minimum number of PT-RS subcarriers is a number of consecutive subcarriers to which the first PT-RS is mapped in a frequency band, and the first PT-RS frequency density is a mapping interval of the first PT-RS in frequency domain.

19. The first TRP according to claim 16, wherein the at least one processor further causes the first TRP to perform: receiving, from the second TRP, at least one of information of a second minimum number of PT-RS subcarriers or information of a second PT-RS frequency density, wherein the second parameter set is configured considering at least one of the second minimum number of PT-RS subcarriers or the second PT-RS frequency density, the second minimum number of PT-RS subcarriers is a number of consecutive subcarriers to which the second PT-RS is mapped in a frequency band, and the second PT-RS frequency density is a mapping interval of the second PT-RS in frequency domain.

20. The first TRP according to claim 16, wherein the at least one processor further causes the first TRP to perform: transmitting the first parameter set and the second parameter set to the terminal.

【FIG. 1】

【FIG. 2】

【FIG. 3】

【FIG. 4a】

【FIG. 4b】

【FIG. 5】

【FIG. 6】

subframe (1ms)

| slot #0 | slot #1 | ... | slot #n |

【FIG. 7】

slot

| #0 | #1 | #2 | #3 | #4 | #5 | #6 | #7 | #8 | #9 | #10 | #11 | #12 | #13 |

OFDM symbol

【FIG. 8】

REG

N subcarriers

RE

N OFDM symbols

[FIG. 9]

EP 4 586 535 A1

[FIG. 10]

EP 4 586 535 A1

【FIG. 11】

## INTERNATIONAL SEARCH REPORT

| International application No. |
|---|
| **PCT/KR2023/019849** |

### A. CLASSIFICATION OF SUBJECT MATTER

**H04L 5/00**(2006.01)i; **H04W 72/04**(2009.01)i

According to International Patent Classification (IPC) or to both national classification and IPC

### B. FIELDS SEARCHED

Minimum documentation searched (classification system followed by classification symbols)

H04L 5/00(2006.01); H04L 1/00(2006.01); H04L 27/26(2006.01); H04W 72/04(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: TRP, PT-RS 자원(PT-RS resource), 중첩(overlap), 정보 요소(information element)

### C. DOCUMENTS CONSIDERED TO BE RELEVANT

| Category* | Citation of document, with indication, where appropriate, of the relevant passages | Relevant to claim No. |
|---|---|---|
| Y | US 2022-0311571 A1 (TELEFONAKTIEBOLAGET LM ERICSSON (PUBL)) 29 September 2022 (2022-09-29)<br>See paragraphs [0080]-[0097]; claims 1 and 6; and figures 1-7. | 1,8-9,16,20 |
| A | | 2-7,10-15,17-19 |
| Y | KR 10-2018-0071301 A (LG ELECTRONICS INC.) 27 June 2018 (2018-06-27)<br>See claim 1. | 1,8-9,16,20 |
| A | KR 10-1980715 B1 (LG ELECTRONICS INC.) 21 May 2019 (2019-05-21)<br>See paragraphs [0259]-[0284]; and figure 27. | 1-20 |
| A | KR 10-2020-0111200 A (SAMSUNG ELECTRONICS CO., LTD.) 28 September 2020 (2020-09-28)<br>See paragraphs [0059]-[0095]. | 1-20 |
| A | KR 10-2019-0116845 A (SAMSUNG ELECTRONICS CO., LTD.) 15 October 2019 (2019-10-15)<br>See paragraphs [0107]-[0116]; and figure 12. | 1-20 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **20 March 2024** | **20 March 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

| International application No. |
|---|
| **PCT/KR2023/019849** |

| Patent document cited in search report | | | Publication date (day/month/year) | Patent family member(s) | | | Publication date (day/month/year) |
|---|---|---|---|---|---|---|---|
| US | 2022-0311571 | A1 | 29 September 2022 | US | 11824803 | B2 | 21 November 2023 |
| | | | | WO | 2022-203559 | A1 | 29 September 2022 |
| KR | 10-2018-0071301 | A | 27 June 2018 | CN | 109314686 | A | 05 February 2019 |
| | | | | CN | 109314686 | B | 31 August 2021 |
| | | | | EP | 3451601 | A1 | 06 March 2019 |
| | | | | EP | 3451601 | B1 | 06 October 2021 |
| | | | | KR | 10-2019-0031600 | A | 26 March 2019 |
| | | | | KR | 10-2019-0127998 | A | 13 November 2019 |
| | | | | KR | 10-2044704 | B1 | 14 November 2019 |
| | | | | KR | 10-2235180 | B1 | 02 April 2021 |
| | | | | US | 10587446 | B2 | 10 March 2020 |
| | | | | US | 10938616 | B2 | 02 March 2021 |
| | | | | US | 2019-0081844 | A1 | 14 March 2019 |
| | | | | US | 2020-0153673 | A1 | 14 May 2020 |
| | | | | WO | 2017-188591 | A1 | 02 November 2017 |
| KR | 10-1980715 | B1 | 21 May 2019 | AU | 2017-337964 | A1 | 11 April 2019 |
| | | | | AU | 2017-337964 | B2 | 05 March 2020 |
| | | | | AU | 2018-246779 | A1 | 24 January 2019 |
| | | | | AU | 2018-246779 | B2 | 02 January 2020 |
| | | | | BR | 112019006262 | A2 | 25 June 2019 |
| | | | | BR | 112019006262 | B1 | 11 October 2022 |
| | | | | BR | 112019007304 | A2 | 02 July 2019 |
| | | | | BR | 112019009259 | A2 | 16 July 2019 |
| | | | | BR | 112019009259 | A8 | 06 December 2022 |
| | | | | BR | 112019009259 | B1 | 14 February 2023 |
| | | | | CA | 3032798 | A1 | 04 October 2018 |
| | | | | CA | 3032798 | C | 19 July 2022 |
| | | | | CL | 2019000065 | A1 | 05 April 2019 |
| | | | | CN | 109478993 | A | 15 March 2019 |
| | | | | CN | 109478993 | B | 19 November 2021 |
| | | | | CN | 109644096 | A | 16 April 2019 |
| | | | | CN | 109644096 | B | 29 December 2020 |
| | | | | CN | 110463099 | A | 15 November 2019 |
| | | | | CN | 110463099 | B | 21 January 2022 |
| | | | | CN | 110463130 | A | 15 November 2019 |
| | | | | CN | 110463130 | B | 29 April 2022 |
| | | | | CN | 110651443 | A | 03 January 2020 |
| | | | | CN | 110651443 | B | 12 July 2022 |
| | | | | CN | 112491509 | A | 12 March 2021 |
| | | | | EP | 3480993 | A1 | 08 May 2019 |
| | | | | EP | 3485596 | A1 | 22 May 2019 |
| | | | | EP | 3485596 | A4 | 26 February 2020 |
| | | | | EP | 3485596 | B1 | 04 August 2021 |
| | | | | EP | 3570473 | A2 | 20 November 2019 |
| | | | | EP | 3627745 | A1 | 25 March 2020 |
| | | | | JP | 2019-533932 | A | 21 November 2019 |
| | | | | JP | 2019-535213 | A | 05 December 2019 |
| | | | | JP | 2020-502904 | A | 23 January 2020 |
| | | | | JP | 6640428 | B2 | 05 February 2020 |
| | | | | JP | 6861280 | B2 | 21 April 2021 |

Form PCT/ISA/210 (patent family annex) (July 2022)

**INTERNATIONAL SEARCH REPORT**
Information on patent family members

International application No.

**PCT/KR2023/019849**

| Patent document cited in search report | Publication date (day/month/year) | Patent family member(s) | | | Publication date (day/month/year) |
|---|---|---|---|---|---|
| | | JP | 6977031 | B2 | 08 December 2021 |
| | | KR | 10-2004838 | B1 | 29 July 2019 |
| | | KR | 10-2018-0135869 | A | 21 December 2018 |
| | | KR | 10-2077044 | B1 | 13 February 2020 |
| | | KR | 10-2254897 | B1 | 24 May 2021 |
| | | MX | 2019002549 | A | 17 June 2019 |
| | | MX | 2019002597 | A | 04 July 2019 |
| | | MX | 2019003128 | A | 06 June 2019 |
| | | MY | 194336 | A | 29 November 2022 |
| | | PH | 12019500212 | A1 | 02 December 2019 |
| | | RU | 2713652 | C1 | 06 February 2020 |
| | | RU | 2725704 | C1 | 03 July 2020 |
| | | SG | 11201900091 | A | 27 February 2019 |
| | | SG | 11201900095 | A | 27 February 2019 |
| | | US | 10447319 | B1 | 15 October 2019 |
| | | US | 10476646 | B2 | 12 November 2019 |
| | | US | 10523393 | B2 | 31 December 2019 |
| | | US | 10554359 | B2 | 04 February 2020 |
| | | US | 10554364 | B2 | 04 February 2020 |
| | | US | 10886956 | B2 | 05 January 2021 |
| | | US | 10924235 | B2 | 16 February 2021 |
| | | US | 10965415 | B2 | 30 March 2021 |
| | | US | 10998994 | B2 | 04 May 2021 |
| | | US | 11075735 | B2 | 27 July 2021 |
| | | US | 11122589 | B2 | 14 September 2021 |
| | | US | 11469869 | B2 | 11 October 2022 |
| | | US | 11476879 | B2 | 18 October 2022 |
| | | US | 2018-0359071 | A1 | 13 December 2018 |
| | | US | 2019-0165910 | A1 | 30 May 2019 |
| | | US | 2019-0238247 | A1 | 01 August 2019 |
| | | US | 2019-0238295 | A1 | 01 August 2019 |
| | | US | 2019-0296781 | A1 | 26 September 2019 |
| | | US | 2019-0341950 | A1 | 07 November 2019 |
| | | US | 2020-0077419 | A1 | 05 March 2020 |
| | | US | 2020-0145161 | A1 | 07 May 2020 |
| | | US | 2020-0220675 | A1 | 09 July 2020 |
| | | US | 2020-0389270 | A1 | 10 December 2020 |
| | | US | 2021-0075453 | A1 | 11 March 2021 |
| | | US | 2021-0184811 | A1 | 17 June 2021 |
| | | WO | 2018-062942 | A1 | 05 April 2018 |
| | | WO | 2018-070767 | A1 | 19 April 2018 |
| | | WO | 2018-182242 | A2 | 04 October 2018 |
| | | WO | 2018-182242 | A3 | 15 November 2018 |
| | | WO | 2018-182244 | A1 | 04 October 2018 |
| | | WO | 2018-182248 | A1 | 04 October 2018 |
| | | WO | 2018-212505 | A1 | 22 November 2018 |
| KR 10-2020-0111200 A | 28 September 2020 | EP | 3729711 | A1 | 28 October 2020 |
| | | GB | 201802574 | D0 | 04 April 2018 |
| | | GB | 201902050 | D0 | 03 April 2019 |
| | | GB | 2573371 | A | 06 November 2019 |

Form PCT/ISA/210 (patent family annex) (July 2022)

## INTERNATIONAL SEARCH REPORT
### Information on patent family members

International application No.

**PCT/KR2023/019849**

| Patent document cited in search report | Publication date (day/month/year) | Patent family member(s) | | | Publication date (day/month/year) |
|---|---|---|---|---|---|
| | | GB | 2573371 | B | 20 January 2021 |
| | | US | 11206118 | B2 | 21 December 2021 |
| | | US | 2021-0014021 | A1 | 14 January 2021 |
| | | WO | 2019-160379 | A1 | 22 August 2019 |
| KR 10-2019-0116845 A | 15 October 2019 | CN | 111937331 | A | 13 November 2020 |
| | | CN | 111937331 | B | 30 May 2023 |
| | | EP | 3745620 | A1 | 02 December 2020 |
| | | US | 11469846 | B2 | 11 October 2022 |
| | | US | 2021-0044372 | A1 | 11 February 2021 |
| | | WO | 2019-194577 | A1 | 10 October 2019 |

Form PCT/ISA/210 (patent family annex) (July 2022)